# EUROPEAN PATENT APPLICATION

(11) **EP 4 050 543 A1**
(43) Date of publication of application: **31.08.2022**
(21) Application number: 21210394.9
(22) Date of filing: 25.11.2021
(51) Int. Cl.: G06Q 30/02, H04H 60/06

(54) **METHOD FOR PROCESSING LIVE-STREAMING DATA**

(30) Priority: 26.02.2021 CN 202110221251
(71) Applicant: Beijing Dajia Internet Information Technology Co., Ltd., Haidian District Beijing 100085 (CN)
(72) Inventor: YAO, Pengyan, Beijing, 100085 (CN); FAN, Li, Beijing, 100085 (CN); ZHANG, Yang, Beijing, 100085 (CN); WANG, Fei, Beijing, 100085 (CN); LI, Wusheng, Beijing, 100085 (CN); ZHU, Linghua, Beijing, 100085 (CN)
(74) Representative: Yang, Shu

(57) **Abstract**

Provided is a method for processing live-streaming data, and relates to the technical field of live-streaming technologies. The method includes: displaying (201) at least one live-streaming plan of a live-streaming room; determining (202) a target live-streaming plan in response to a select operation on the at least one live-streaming plan; acquiring (203) plan content of the target live-streaming plan in response to an announcement set operation on the target live-streaming plan; and generating (204) a live-streaming announcement of the target live-streaming plan based on the plan content of the target live-streaming plan.

## Description

### TECHNICAL FIELD

The present disclosure relates to the field of live-streaming technologies, and in particular, relates to a method for processing live-streaming data.

### BACKGROUND

With the continuous development of live-streaming and e-commerce, the combination between the two has become increasingly close. In the related art, an anchor introduces articles in a live-streaming room, such that viewers can watch the live-streaming at any time and purchase the articles recommended in the live-streaming room.

### SUMMARY

According to one aspect of the embodiments of the present disclosure, a method for processing live-streaming data is provided. The method includes: displaying at least one live-streaming plan of a live-streaming room, wherein the live-streaming plan indicates a plan for posting an article in the live-streaming room; determining a target live-streaming plan in response to a select operation on the at least one live-streaming plan; acquiring plan content of the target live-streaming plan in response to an announcement set operation on the target live-streaming plan, wherein the plan content includes an article plan, and the article plan involves at least one article; and generating a live-streaming announcement of the target live-streaming plan based on the plan content.

In some embodiments, the plan content further includes basic plan information of the target live-streaming plan, and generating the live-streaming announcement of the target live-streaming plan based on the plan content includes: generating basic live-streaming information of the live-streaming announcement of the target live-streaming plan based on the basic plan information; generating article announcement information of the live-streaming announcement based on the article plan; and generating the live-streaming announcement based on the basic live-streaming information and the article announcement information.

In some embodiments, generating the basic live-streaming information of the live-streaming announcement of the target live-streaming plan based on the basic plan information includes: filling the basic plan information into the basic live-streaming information.

In some embodiments, the method further includes: editing the basic live-streaming information in response to an information input operation on the basic live-streaming information.

In some embodiments, generating the article announcement information of the live-streaming announcement based on the article plan includes: acquiring transaction data of a first article in response to a transaction form set operation on the first article, wherein the transaction data indicates a transaction form for transacting the first article, and the first article is any article of the at least one article in the article plan; and adding the transaction data of the first article to the article announcement information.

In some embodiments, generating the article announcement information of the live-streaming announcement based on the article plan includes: determining an announcement sequence of the at least one article in the article announcement information in response to a sequence adjust operation on the at least one article in the article plan, wherein the announcement sequence indicates a display sequence of the at least one article in the live-streaming announcement.

In some embodiments, generating the article announcement information of the live-streaming announcement based on the article plan includes: determining an adjusted sequence of the at least one article in response to a sequence adjust operation on the at least one article in the article plan of the target live-streaming plan, wherein the sequence of the article indicates a display sequence of the article in the live-streaming announcement; adding each article in the article announcement information of the live-streaming announcement of the target live-streaming plan based on adjusted sequence of each article in the target live-streaming plan.

In some embodiments, generating the article announcement information of the live-streaming announcement based on the article plan includes: adding a recommendation tag to a second article in response to a recommend operation on the second article, wherein the second article is any article of the at least one article in the article plan; and adding the second article and the recommended tag of the second article to the article announcement information.

In some embodiments, the method further includes: acquiring an announcement cover of the target live-streaming plan in response to a cover set operation on the target live-streaming plan.

In some embodiments, acquiring an announcement cover of the target live-streaming plan in response to a cover set operation on the target live-streaming plan includes: acquiring an input cover in response to a cover set operation on the target live-streaming plan, and determining the cover as the announcement cover of the target live-streaming plan in the case that the cover satisfies a cover condition.

In some embodiments, the method further includes: acquiring a preview video of the target live-streaming plan in response to a video set operation on the target live-streaming plan.

In some embodiments, acquiring a preview video of the target live-streaming plan in response to a video set operation on the target live-streaming plan includes: acquiring an input video in response to a video set operation on the target live-streaming plan; and in the case that the video satisfies a video condition, determining the video as the preview video of the target live-streaming plan.

In some embodiments, displaying the at least one live-streaming plan of the live-streaming room includes: displaying a live-streaming announcement list page, wherein the live-streaming announcement list page includes an announcement create control; and displaying the at least one live-streaming plan, in response to an operation on the announcement create control.

In some embodiments, displaying the live-streaming announcement list page includes: displaying at least one created live-streaming announcement and at least one release state on the live-streaming announcement list page, wherein one release state corresponds to one created live-streaming announcement, and the release state includes a pending release state, a released state, or a revoked state.

In some embodiments, displaying the live-streaming announcement list page includes: displaying at least one created live-streaming announcement and at least one live-streaming state on the live-streaming announcement list page, wherein one live-streaming state corresponds to one created live-streaming announcement, and the live-streaming state includes an un-started state, an in-progress state, an end state, or an expiration state.

In some embodiments, the method further includes: displaying a live-streaming watch control corresponding to the live-streaming announcement that is in an in-progress state or an end state; in response to performing a trigger operation on the live-streaming watch control, displaying an associated live-streaming video of the live-streaming announcement.

In some embodiments, the method further includes: displaying a details page of the live announcement in response to an operation of viewing details of any live-streaming announcement of the at least one live-streaming announcement.

In some embodiments, the method further includes: sending a live-streaming announcement release request to a server, wherein the live-streaming announcement release request is configured to request the server to release the live-streaming announcement to at least one user account.

In some embodiments, the method further includes: displaying presentation data information on a details page of the live-streaming announcement after the live-streaming announcement is released, wherein the presentation data information includes at least one of a total number of presentation times of the live-streaming announcement and a number of presentation times of the live-streaming announcement at each presentation position.

In some embodiments, the live-streaming announcement released to the at least one user account is associated with a first subscription entry, wherein the first subscription entry is configured to allow the at least one user account to subscribe for a start-up reminder of the live-streaming room; and the method further includes: displaying first subscription data information on a details page of the live-streaming announcement, wherein the first subscription data information includes at least one of a total number of user accounts that have subscribed for the start-up reminder, and a number of user accounts that have subscribed for the start-up reminder based on each presentation position.

In some embodiments, the method further includes at least one of: displaying a first proportion on the details page of the live-streaming announcement, wherein the first proportion is a proportion of user accounts that have followed an account of an anchor of the live-streaming room, among the user accounts that have subscribed for the start-up reminder; and displaying a second proportion on the details page of the live-streaming announcement, wherein the second proportion is a proportion of user accounts that have undergone an article transaction event based on articles associated with the account of the anchor of the live-streaming room, among the user accounts that have subscribed for the start-up reminder.

In some embodiments, the method further includes: displaying a first account subscription rate for the live-streaming room on the details page of the live-streaming announcement, wherein the first account subscription rate indicates a proportion of user accounts that have undergone an article transaction event, among the user accounts that have subscribed for the start-up reminder.

In some embodiments, the method further includes: displaying a second account subscription rate for the live-streaming announcement at each presentation position, on the details page of the live-streaming announcement, wherein the second account subscription rate indicates a proportion of the user accounts that have undergone the article transaction event, among the user accounts that have subscribed for the start-up reminder at the presentation position.

In some embodiments, the method further includes: displaying a first live-streaming recall rate for the live-streaming room on the details page of the live-streaming announcement, wherein the first live-streaming recall rate indicates a proportion of user accounts that have entered the live-streaming room, among the user accounts that have subscribed for the start-up reminder.

In some embodiments, the method further includes: displaying a second live-streaming recall rate of the live-streaming announcement at each presentation position, on the details page of the live-streaming announcement, wherein the second live-streaming recall rate indicates a proportion of the user accounts that have entered the live-streaming room, among the user accounts that have subscribed for the start-up reminder at the presentation position.

In some embodiments, the live-streaming announcement released to the at least one user account is associated with at least one second subscription entry, wherein one second subscription entry corresponds to one article in the live-streaming announcement, and the second subscription entry is configured to allow the at least one user account to subscribe for the at least one article; and the method further includes: displaying second subscription data information on a details page of the live-streaming announcement, wherein the second subscription data information includes a number of subscriber user accounts corresponding to the at least one article.

In some embodiments, generating the live-streaming announcement of the target live-streaming plan based on the plan content includes: verifying the plan content; and generating the live-streaming announcement based on the plan content in the case that verification of the plan content is successful.

According to another aspect of the embodiments of the present disclosure, an apparatus for processing live-streaming data is provided. The apparatus includes a displaying unit, a determining unit, an acquiring unit, and a generating unit. The displaying unit is configured to display at least one live-streaming plan of a live-streaming room, wherein the live-streaming plan indicates a plan for posting an article in the live-streaming room. The determining unit is configured to determine a target live-streaming plan in response to a select operation on the at least one live-streaming plan. The acquiring unit is configured to acquire plan content of the target live-streaming plan in response to an announcement set operation on the target live-streaming plan, wherein the plan content includes an article plan, and the article plan involves at least one article. The generating unit is configured to generate a live-streaming announcement of the target live-streaming plan based on the plan content.

According to another aspect of the embodiments of the present disclosure, a non-transitory computer-readable storage medium stored with one or more instructions therein is provided, wherein the one or more instructions, when loaded and executed by a processor of a computer device, causes the computer device to: display at least one live-streaming plan of a live-streaming room, wherein the live-streaming plan indicates a plan for posting an article in the live-streaming room; determine a target live-streaming plan in response to a select operation on the at least one live-streaming plan; acquire plan content of the target live-streaming plan in response to an announcement set operation on the target live-streaming plan, wherein the plan content includes an article plan, and the article plan involves at least one article; and generate a live-streaming announcement of the target live-streaming plan based on the plan content.

### BRIEF DESCRIPTION OF THE DRAWINGS

FIG. 1 shows an implementation environment of a method for processing live-streaming data according to an embodiment of the present disclosure;
FIG. 2 is a flowchart of a method for processing live-streaming data according to an embodiment of the present disclosure;
FIG. 3 is a flowchart of a method for processing live-streaming data according to an embodiment of the present disclosure;
FIG. 4 is a flowchart of a method for processing live-streaming data according to an embodiment of the present disclosure;
FIG. 5 is a schematic diagram of a live-streaming announcement list page according to an embodiment of the present disclosure;
FIG. 6 is a schematic diagram of an announcement creation window according to an embodiment of the present disclosure;
FIG. 7 is a schematic diagram of an information setting page according to an embodiment of the present disclosure;
FIG. 8 is a schematic diagram of a live-streaming announcement according to an embodiment of the present disclosure;
FIG. 9 is a schematic diagram of the state of live-streaming announcement according to an embodiment of the present disclosure;
FIG. 10 is a schematic diagram of a details page according to an embodiment of the present disclosure;
FIG. 11 is a block diagram of an apparatus for processing live-streaming data according to an embodiment of the present disclosure;
FIG. 12 is a block diagram of an apparatus for processing live-streaming data according to an embodiment of the present disclosure; and
FIG. 13 is a block diagram of a terminal according to an embodiment of the present disclosure.

### DETAILED DESCRIPTION

Information involved in the present disclosure is information authorized by a user or fully authorized by various parties.

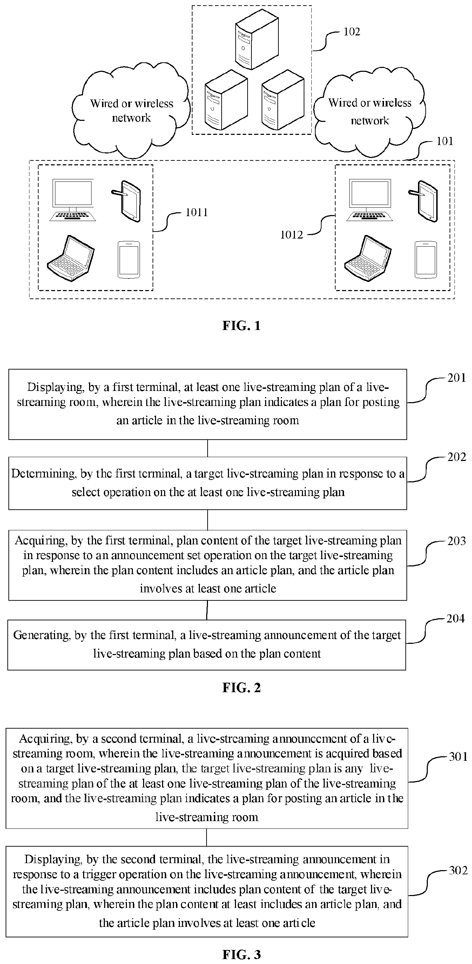

FIG. 1 shows an implementation environment of a method for processing live-streaming data according to an embodiment of the present disclosure. Referring to FIG. 1, the implementation environment includes a terminal 101 and a server 102.

The terminal 101 includes at least one of devices such as a smart phone, a smart watch, a desktop computer, a laptop computer, a virtual reality terminal, an augmented reality terminal, a wireless terminal, and a laptop portable computer. The terminal 101 has a communication function and is capable of being connected to a wired or wireless network. In some embodiments, the terminal 101 generally refers to one of a plurality of terminals, and this embodiment only takes the terminal 101 as an example for illustration. In some embodiments, a number of the terminals mentioned above may be more or less. In some embodiments, the terminal 101 runs a live-streaming application client, which provides a live-streaming announcement function. In some embodiments, prior to the live-streaming, a user may create a live-streaming announcement for his/her own live-streaming room by the live-streaming application client, to achieve the announcement of live-streaming content, a live-streaming object, and other content in various aspects, thereby attracting more viewers to enter the live-streaming room and watch the live-streaming. In some other embodiments, the user may know more live-streaming content in detail by watching live-streaming announcements of other anchors, and then enter a live-streaming room based on their own preferences.

In embodiments of the present disclosure, the terminal 101 includes a first terminal 1011 and a second terminal 1012. The first terminal 1011 is a terminal corresponding to an account of an anchor, and is configured to create a live-streaming announcement for a live-streaming room of the account of the anchor. The second terminal 1012 is a terminal corresponding to another user account, and is configured to display an acquired live-streaming announcement.

The server 102 is an independent physical server. In some embodiments, the server 102 is a server cluster composed of a plurality of physical servers, or a distributed file system. In some other embodiments, the server 102 is a cloud server providing basic cloud computing services such as cloud services, cloud databases, cloud computing, cloud functions, cloud storage, network services, cloud communications, middleware services, domain name services, security services, content delivery networks (CDN), and big data and artificial intelligence platforms. In some embodiments, the server 102 is a backend server of the live-streaming application client. The server 102 and the terminal 101 are directly or indirectly connected through wired or wireless communication, which is not limited in the embodiments of the present disclosure. In some embodiments, a number of the servers 102 mentioned above may be more or less, which is not limited in the embodiments of the present disclosure. In some embodiments, the server 102 further includes other functional servers to provide more comprehensive and diversified services.

FIG. 2 is a flowchart of a method for processing live-streaming data according to an embodiment of the present disclosure. The method is applicable to a computer device, wherein the computer device is provided as a terminal shown in FIG. 1. Schematically, as shown in FIG. 2, the terminal is referred to as the first terminal. The method is illustrated hereinafter by taking the method applied to the first terminal as an example. The method includes the following processes.

In 201, the first terminal displays at least one live-streaming plan of a live-streaming room, wherein the live-streaming plan indicates a plan for posting an article in the live-streaming room.

In embodiments of the present disclosure, the live-streaming room is of an account logged in by the first terminal, i.e., the live-streaming room is corresponding to the account of the anchor. The anchor generally sets the live-streaming plan prior to the live-streaming, then performs the live-streaming based on the target live-streaming plan.

In 202, the first terminal determines a target live-streaming plan in response to a select operation on the at least one live-streaming plan.

In the embodiments of the present disclosure, the target live-streaming plan is any live-streaming plan of the at least one live-streaming plan. In the case that the anchor would like to create a live-streaming announcement for a target live-streaming plan, the target live-streaming plan can be quickly determined through a select operation, and then following processes may be performed based on the target live-streaming plan.

In 203, the first terminal acquires plan content of the target live-streaming plan in response to an announcement set operation on the target live-streaming plan, wherein the plan content includes an article plan, and the article plan involves at least one article.

In the embodiments of the present disclosure, the live-streaming plan includes plan content, wherein the plan content includes an article plan. The article plan involves at least one article. In some embodiments, the at least one article includes article to be traded in the live-streaming room. For example, the article is a commodity. In some embodiments, the article plan further involves article information associated with the at least one article, such as an article name, an article picture, an article price, and the like.

In 204, the first terminal generates a live-streaming announcement of the target live-streaming plan based on the plan content.

In the embodiments of the present disclosure, in response to acquiring the plan content of the target live-streaming plan, the first terminal generates a live-streaming announcement of the target live-streaming plan based on the plan content, and the generated live-streaming announcement includes the plan content of the target live-streaming plan.

The embodiments of the present disclosure provide a function of automatically creating a live-streaming announcement, which improves the efficiency in creating the live-streaming announcement; and by displaying the live-streaming announcement, the live-streaming room may be warmed up in advance, and attract more users to enter the live-streaming room of the anchor, thereby increasing the user traffic of the live-streaming room and further increasing a user conversion rate.

FIG. 3 is a flowchart of a method for processing live-streaming data according to an embodiment of the present disclosure. The method is applicable to a computer device, wherein the computer device is provided as a terminal shown in FIG. 1. Schematically, as shown in FIG. 3, the terminal is referred to as a second terminal. The method is illustrated hereinafter by taking the method applied to the second terminal as an example. The method includes the following processes.

In 301, the second terminal acquires a live-streaming announcement of a live-streaming room, wherein the live-streaming announcement is acquired based on a target live-streaming plan, the target live-streaming plan is any live-streaming plan of at least one live-streaming plan of the live-streaming room, and the live-streaming plan indicates a plan for posting an article in the live-streaming room.

In embodiments of the present disclosure, the live-streaming announcement of the live-streaming room may be pushed to the second terminal. Since the live-streaming announcement is acquired based on the target live-streaming plan, information in the target live-streaming plan may be announced through the live-streaming announcement.

In 302, the second terminal displays the live-streaming announcement in response to a trigger operation on the live-streaming announcement, wherein the live-streaming announcement includes plan content of the target live-streaming plan, wherein the plan content at least includes an article plan, and the article plan involves at least one article.

In the embodiments of the present disclosure, in response to acquiring the live-streaming announcement of the live-streaming room, the second terminal may trigger a display of the live-streaming announcement, i.e., a display of the plan content of the target live-streaming plan, such as a display of the at least one article included in the article plan.

In the embodiments of the present disclosure, a user may know the live-streaming content of the live-streaming room in advance by viewing the live-streaming announcement instead of viewing the live-streaming room, thereby improving the efficiency of human-computer interaction.

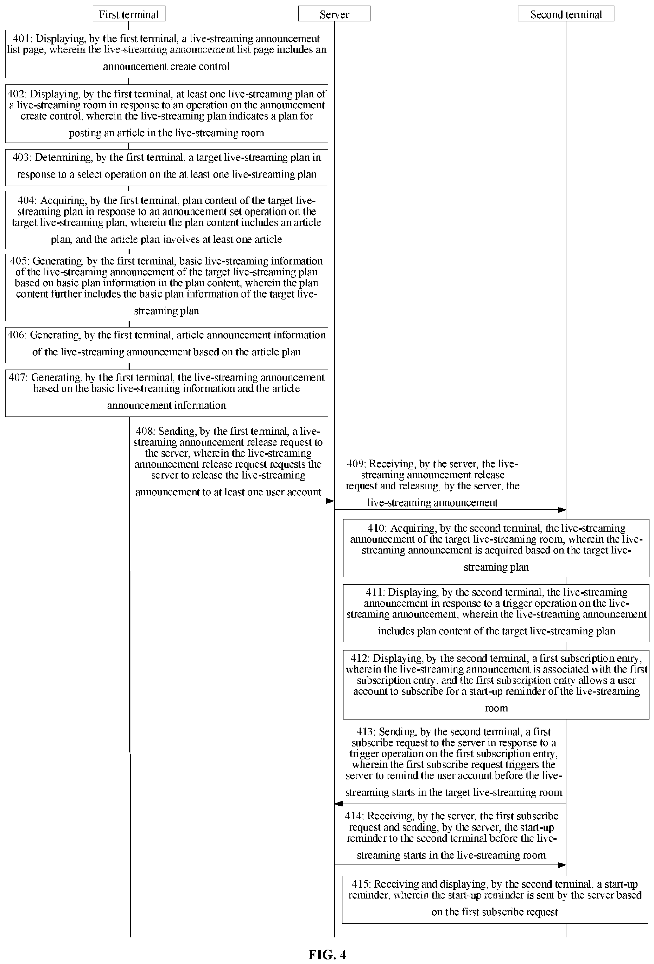

FIGS. 2 and 3 only show the basic processes of the present disclosure. The technical solution according to the present disclosure will be further set forth based on specific embodiments below. FIG. 4 is a flowchart of a method for processing live-streaming data according to an embodiment of present disclosure. In this embodiment, the technical solution is illustrated by taking an interaction process among the first terminal, the second terminal and the server as an example. Referring to FIG. 4, the method includes the following processes.

In 401, the first terminal displays a live-streaming announcement list page, wherein the live-streaming announcement list page includes an announcement create control.

The first terminal is a terminal corresponding to an account of an anchor, and is configured to create a live-streaming announcement for a live-streaming room of the account of the anchor.

In some embodiments, in the case that the anchor would like to create a live-streaming announcement, the anchor starts a live-streaming application client by operating on the first terminal, wherein a live-streaming manage control is displayed on an interface of the live-streaming application client. The anchor taps the live-streaming manage control and the first terminal displays a live-streaming management page in response to the tap operation on the live-streaming manage control. The live-streaming management page includes a plurality of function entries, wherein the function entries are configured to display pages corresponding to the function entries. In some embodiments, the live-streaming management page includes an announcement management function entry; and the first terminal displays a live-streaming announcement list page in response to a tap operation on the announcement management function entry, and then creates a live-streaming announcement of its own live-streaming room based on an announcement create control on the live-streaming announcement list page.

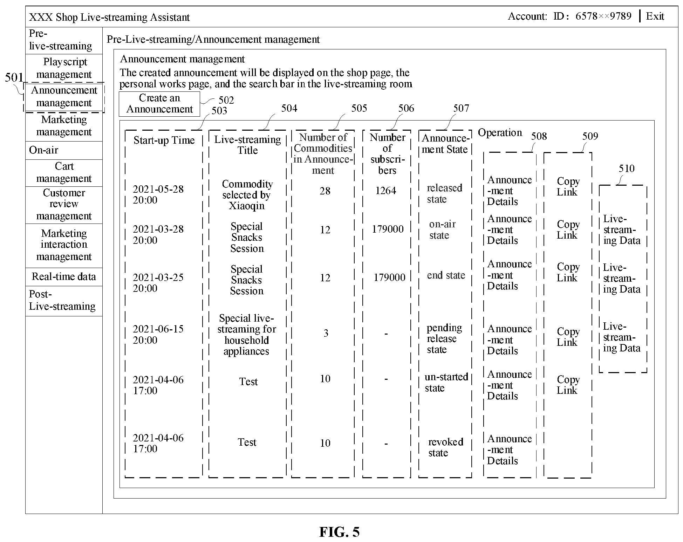

For example, FIG. 5 is a schematic diagram of a live-streaming announcement list page according to an embodiment of present disclosure. Referring to FIG. 5, a left column in FIG. 5 shows a plurality of function entries. In some embodiments, the announcement management function entry is an announcement management function entry 501 shown in FIG. 5. In the case that the announcement management function entry 501 is triggered, the first terminal displays the live-streaming announcement list page. In some embodiments, the announcement create control is a "Create an Announcement" control 502 shown in FIG. 5.

In some embodiments, the first terminal displays at least one created live-streaming announcement and information related to the at least one created live-streaming announcement on the live-streaming announcement list page. For example, the at least one created live-streaming announcement and the information related to the at least one created live-streaming announcement are displayed in the form of a list.

In 402, the first terminal displays at least one live-streaming plan of a live-streaming room in response to an operation on the announcement create control, wherein the live-streaming plan indicates a plan for posting an article in the live-streaming room.

In some embodiments, the operation on the announcement create control is a tap operation or a long-press operation on the announcement create control. The live-streaming room is a live-streaming room of an account logged in by the first terminal, i.e., the live-streaming room is the live-streaming room of an account of an anchor.

In the embodiments of the present disclosure, the live-streaming plan includes plan content, wherein the plan content includes an article plan and a virtual resource plan. The article plan involves at least one article, and the virtual resource plan includes at least one virtual resource. In some embodiments, the at least one article is article to be traded in the live-streaming room, such as a commodity. The at least one virtual resource is at least one promotion, such as a limited time offer, a red-packet activity, and a shopping with coupon activity, provided by the live-streaming room.

In some embodiments, in response to displaying the live-streaming announcement list page, the first terminal pops up an announcement creation window on the live-streaming announcement list page in response to the operation on the announcement create control; and displays the at least one live-streaming plan of the live-streaming room in the announcement creation window. By performing the operation on the announcement create control, the at least one live-streaming plan of the live-streaming room may be displayed, thereby reducing operating costs, improving the efficiency of human-computer interaction, and further improving the efficiency of creating the live-streaming announcement.

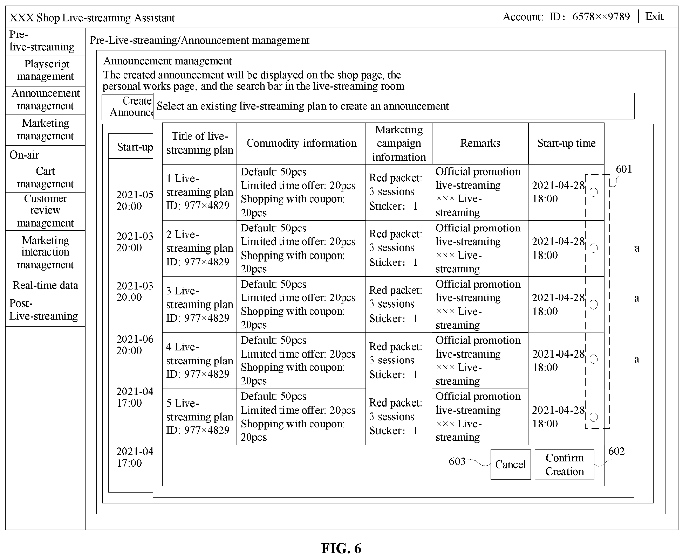

For example, FIG. 6 is a schematic diagram of an announcement creation window according to an embodiment of present disclosure. Referring to FIG. 6, the announcement creation window is displayed on top of the live-streaming announcement list page, and the at least one live-streaming plan of the live-streaming room is displayed in the announcement creation window.

In 403, the first terminal determines a target live-streaming plan in response to a select operation on the at least one live-streaming plan.

The target live-streaming plan is any live-streaming plan of the at least one live-streaming plan.

In some embodiments, the announcement creation window includes at least one select control, wherein one live-streaming plan corresponds to one select control. Accordingly, in 403, in response to a select operation on any select control of select controls in the announcement creation window, the first terminal determines a live-streaming plan corresponding to a selected select control as the target live-streaming plan.

For example, referring to FIG. 6, the select control is a select control 601 shown in FIG. 6.

In 404, the first terminal acquires plan content of the target live-streaming plan in response to an announcement set operation on the target live-streaming plan, wherein the plan content includes an article plan, and the article plan involves at least one article.

In some embodiments, the announcement creation window includes a create control; and in the case that the target live-streaming plan is determined, the first terminal acquires the plan content of the target live-streaming plan in response to a trigger operation on the create control. In some embodiments, the first terminal displays an information setting page, in which at least one article in the acquired plan content is displayed; and the subsequent process of generating a live-streaming announcement is performed based on the plan content.

For example, referring to FIG. 6, the create control is a "Confirm Creation" control 602 shown in FIG. 6.

In 405, the first terminal generates basic live-streaming information of the live-streaming announcement of the target live-streaming plan based on basic plan information in the plan content, wherein the plan content further includes the basic plan information of the target live-streaming plan.

The basic plan information describes attribute information of the target live-streaming plan. For example, the basic plan information includes a live-streaming title, a live-streaming time, and live-streaming content of the target live-streaming plan.

The basic live-streaming information describes attribute information of the live-streaming announcement of the target live-streaming plan. In the embodiments of the present disclosure, the basic live-streaming information is determined based on the basic plan information. In some embodiments, the basic live-streaming information includes information in the basic plan information, for example, the live-streaming title, the live-streaming time, the live-streaming content and the like of the target live-streaming plan. In some embodiments, the basic live-streaming information includes information acquired by editing the basic plan information, for example, a live-streaming title or live-streaming content acquired by editing.

In some embodiments, the basic live-streaming information corresponds to at least one content item; and the first terminal acquires the basic plan information included in the target live-streaming plan, and fills the basic plan information into the content item corresponding to the basic live-streaming information. For example, in the case that the basic live-streaming information includes the live-streaming title, the live-streaming time, and the live-streaming content of the target live-streaming plan, the basic live-streaming information corresponds to three content items, namely, the live-streaming title, the live-streaming time, and the live-streaming content. The first terminal acquires the basic live-streaming information of the live-streaming announcement by acquiring the basic plan information included in the target live-streaming plan, to improve the efficiency of generating the basic live-streaming information.

In some embodiments, in response to acquiring the basic plan information included in the target live-streaming plan, the first terminal displays the basic plan information included in the target live-streaming plan in the case that the information setting page is displayed. For example, in the case that the target live-streaming plan includes the live-streaming title and the live-streaming time, the live-streaming title and live-streaming time included in the target live-streaming plan are displayed on the information setting page. In this way, in the case that the live-streaming plan is selected, the basic plan information that has been set in the live-streaming plan may be correspondingly synchronized.

In some embodiments, in the case that the basic plan information is filled into the content item corresponding to the basic live-streaming information, the first terminal may further edit the basic live-streaming information. An editing process may be as follows: the first terminal edits the basic live-streaming information in response to an information input operation on the basic live-streaming information. By editing the basic live-streaming information through manually input, the basic live-streaming information may be changed, to re-acquire the changed basic live-streaming information, thereby improving the flexibility in setting information and providing convenience for users.

In some embodiments, the first terminal acquires at least one of the live-streaming title, the live-streaming content, and the live-streaming time in the target live-streaming plan, in response to the information input operation on the target live-streaming plan. In some embodiments, the information setting page includes at least one information input control, for example, a live-streaming title input control, a live-streaming content input control, and a live-streaming time input control. Accordingly, the above process includes: acquiring, by the first terminal, information contained in the at least one information input control as the basic live-streaming information of the target live-streaming plan, in response to an input operation on the at least one information input control on the information setting page. In some embodiments, in the case that the basic live-streaming information corresponds to at least one content item, the above at least one information input control has one-to-one corresponding relationship with the at least one content item.

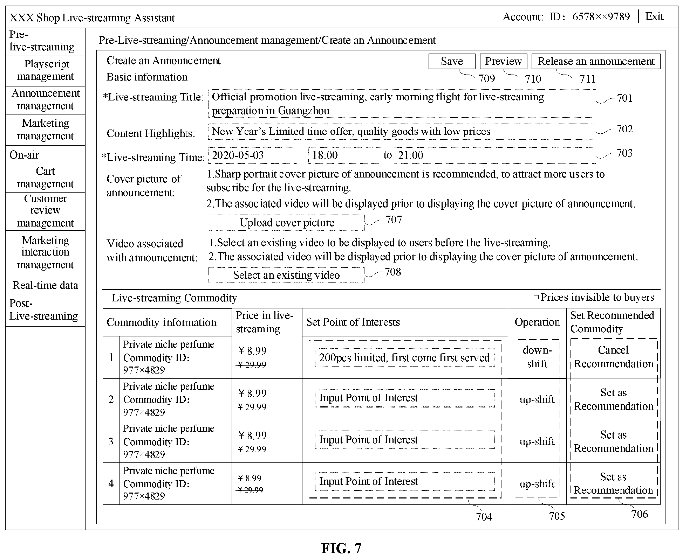

For example, FIG. 7 is a schematic diagram of an information setting page according to an embodiment of present disclosure. Referring to FIG. 7, the live-streaming title input control is a "Live-streaming Title" control 701 shown in FIG. 7; the live-streaming content input control is a "Content Highlights" control 702 shown in FIG. 7; and the live-streaming time input control is a "Live-streaming Time" control 703 shown in FIG. 7. By performing manual input operation on the input controls, an input content may be customized by the user while the basic live-streaming information of the target live-streaming plan is quickly acquired, which provides convenience for users.

For example, referring to FIG. 7, in the case that the basic plan information includes the live-streaming title and live-streaming time, the live-streaming title included in the target live-streaming plan is filled in the "Live-streaming Title" control 701, and the live-streaming time included in the target live-streaming plan is filled in the "Live-streaming Time" control 703. In some embodiments, the "Live-streaming Title" control 701 and the "Live-streaming Time" control 703 are in an un-editable state at this time.

In some embodiments, in response to acquiring the live-streaming title and live-streaming content of the target live-streaming plan, the first terminal verifies text information contained in the live-streaming title and the live-streaming content based on a target text set, to verify whether a text in the text information matches with a text in the target text set, wherein the target text set is a set of texts that do not satisfy a content condition, for example, a set of sensitive words. In some embodiments, the first terminal verifies the text information contained in the live-streaming title and the live-streaming content based on the target text set; and in the case that no text in the text information matches with the text in the target text set, the first terminal determines that the verification is successful, and 406 is performed. By verifying the text information contained in the live-streaming title and the live-streaming content, whether the text in the text information satisfies the content condition is verified, thereby ensuring that the live-streaming title and live-streaming content are both texts that satisfy the content conditions. In some other embodiments, in the case that a text in the text information matches with a text in the target text set, the first terminal determines that the verification is failed, and displays a verification prompt message, wherein the verification prompt message prompts that the verification is failed. In some embodiments, the verification prompt message further provides a re-entering prompt, wherein the re-entering prompt indicates that the text need to be reentered by the user to satisfy the content condition.

The process mentioned above is a process in which the first terminal performs text verification. In some other embodiments, the text verification process is performed by the server, which is not limited in the embodiments of the present disclosure. For example, in response to acquiring the live-streaming title and live-streaming content of the target live-streaming plan, the first terminal sends a verification request carrying the live-streaming title and the live-streaming content to the server. In response to receiving the verification request, the server performs the process of verifying the live-streaming title and the live-streaming content, and then sends a verification result to the first terminal after acquiring the verification result. In response to receiving the verification result, the first terminal finds out whether the verification is successful or failed based on content indicated by the verification result.

In 406, the first terminal generates article announcement information of the live-streaming announcement based on the article plan.

The article plan includes article information of at least one article. The article information describes attribute information of the at least one article. For example, the article information includes an article name, an article picture, an article price, and the like of the at least one article.

The article announcement information describes attribute information of the at least one article. The article announcement information is determined based on the article information in the article plan. In some embodiments, the article announcement information includes article information of the at least one article, for example, the article name, the article picture, the article price, and the like of the at least one article. In some embodiments, the article announcement information includes information acquired by further setting the at least one article, for example, a transaction form, a sequence and the like of the at least one article. In the embodiments of the present disclosure, the anchor will do the live-streaming subsequently based on the target live-streaming plan. Since the article announcement information includes the at least one article in the target live-streaming plan and article information associated therewith, the article announcement information may provide the announcement of the article to be live-streamed in the live-streaming room.

In some embodiments, the article announcement information corresponds to at least one content item; and the first terminal acquires the article plan included in the plan content of the target live-streaming plan, and fills the article information of at least one article in the article plan, into the content item corresponding to the article announcement information. For example, in the case that the article announcement information includes the article name, the article picture, and the article price of at least one article, the article announcement information corresponds to three content items, namely, the article name, the article picture, and the article price. By acquiring the article plan included in the target live-streaming plan, the first terminal acquires the article announcement information of the live-streaming announcement, thereby improving the efficiency of generating the article announcement information.

In some embodiments, in response to acquiring the article plan included in the plan content of the target live-streaming plan, the first terminal displays the article plan included in the target live-streaming plan in the case that the information setting page is displayed. For example, referring to FIG. 7, in a live-streaming commodity region of the information setting page, at least one article in the article plan and article information of the at least one article are displayed in the form of a list. For example, in the case that the article information includes the article name and the article price of the at least one article, the article name and the article price of the at least one article are displayed on the information setting page. In this way, in the case that the live-streaming plan is selected, the article information of the article that has been set in the live-streaming plan may be correspondingly synchronized.

In some embodiments, the first terminal may further set the at least one article in the article plan, with a corresponding process including at least one of the followings:

(1) In some embodiments, the first terminal acquires transaction data of a first article in response to a transaction form set operation on the first article, wherein the transaction data indicates a transaction form for transacting the first article, and the first article is any article of the at least one article in the article plan; and adds the transaction data of the first article to the article announcement information. By performing the transaction form set operation on the article, transaction data of the article can be acquired, and then the transaction data of the article can be displayed in the live-streaming announcement, such that users can understand the transaction form of the article, thereby increasing the amount of information in the live-streaming announcement.

In some embodiments, the transaction form is determined based on a virtual resource in the target live-streaming plan. For example, in a limited time offer, the transaction form is determined based on a time period and price in the limited time offer; and in a red-packet activity, the transaction form is determined based on a time period for issuing red packets and the amount of money in the red packet in the red-packet activity.

In some embodiments, the information setting page includes at least one transaction data input control, wherein one article corresponds to one transaction data input control. Accordingly, a process of setting the transaction form mentioned above includes: acquiring, by the first terminal, transaction data contained in the at least one transaction data input control as transaction data of the corresponding article, in response to an input operation on at least one transaction data input control on the information setting page. For example, referring to FIG. 7, the transaction data input control is a "Set Point of Interests" control 704 shown in FIG. 7. In this embodiment, by setting the input control, the user can customize input content, such that the user can enter a more attractive transaction form, thereby attracting other users to watch the live-streaming when the live-streaming announcement is displayed.

(2) In some embodiments, the first terminal determines an announcement sequence of the at least one article in the article announcement information in response to a sequence adjust operation on the at least one article in the article plan, wherein the announcement sequence indicates a display sequence of the at least one article in the live-streaming announcement. By performing a sequence adjust operation on the articles, a sequence of the articles can be acquired, and then the articles can be displayed in the corresponding sequence in the live-streaming announcement, thereby improving the display effect of the articles in the live-streaming announcement. For example, articles that attract customers can be ranked top to allow the users to view the articles in high-rank positions, thereby increasing the possibility of the live-streaming announcement being followed by the users, and further increasing the possibility of watching the live-streaming by the users.

In some embodiments, the information setting page includes at least one manipulate control, wherein the manipulate control is an up control or a down control, and one article corresponds to one manipulate control. Accordingly, the above sequence adjustment process includes: taking any up control as an example, the first terminal moves the rank of an article corresponding to the up control upwards in response to a trigger operation on the up control; and taking any down control as an example, the first terminal moves the rank of an article corresponding to the down control downwards in response to a trigger operation on the down control. For example, referring to FIG. 7, the manipulate control is an (up-shift or down-shift) control 705 shown in FIG. 7.

(3) In some embodiments, in response to a recommend operation on a second article, the first terminal adds a recommendation tag to the second article and adds the second article and the recommendation tag of the second article to the article announcement information. By performing the recommend operation on an article, a recommendation tag of the article can be acquired, and then the recommendation tag of the article can be displayed during the live-streaming announcement, such that the user can understand the information related to the article, and the amount of information in the live-streaming announcement can be increased.

In some embodiments, the recommendation tag indicates that an article corresponding to the recommendation tag is a featured article. For example, the recommendation tag shows "featured commodity." In this way, in the case that the article announcement information is displayed in the live-streaming announcement, the recommendation tag is displayed to facilitate the users to understand that the article corresponding to the recommendation tag is a featured object in the current live-streaming; and then, the users enter the live-streaming room based on their own needs.

In some embodiments, the recommendation tag describes a prominent feature of an article corresponding to the recommendation tag. For example, a recommendation tag based on the place of production of the commodity may be "imported from x;" and a recommendation tag based on the attributes of the commodity may be "home essential," and the like. In this way, in the case that the article announcement information is displayed in the live-streaming announcement, the recommendation tag is displayed to facilitate the users to understand the prominent feature of the article corresponding to the recommendation tag, such that more users are attracted to pay attention to the article.

In some embodiments, the recommendation tag indicates the article being preferentially recommended during the live-streaming announcement. For example, the content contained in the recommendation tag is to set the article corresponding to the recommendation tag as the featured article. In some embodiments, the information setting page includes at least one article set control, wherein the article set control is a recommend control or a recommendation cancel control, and one article corresponds to one article set control. Accordingly, the process of setting a recommendation tag includes: taking any recommend control as an example, the first terminal adds a recommendation tag to an article in response to a trigger operation on the recommend control; and taking any recommendation cancel control as an example, the first terminal deletes the recommendation tag of an article in response to a trigger operation on the recommendation cancel control. For example, referring to FIG. 7, the article set control is a (Set as Recommendation or Cancel Recommendation) control 706 shown in FIG. 7. In this way, during displaying the live-streaming announcement, the article with recommendation tag will be highlighted. For example, the article with recommendation tag is displayed as a first article, or the article with recommendation tag is displayed in a target region of the live-streaming announcement, and the like, thereby attracting more users to follow this article. It should be understood that, in some embodiments, there is no need to display the recommendation tag in the live-streaming announcement.

In 407, the first terminal generates the live-streaming announcement based on the basic live-streaming information and the article announcement information.

In the embodiments mentioned above, the basic plan information in the live-streaming plan is taken into consideration, and the live-streaming announcement is generated based on the basic plan information and the article plan, which increases the basic live-streaming information in the live-streaming announcement, enriches the amount of information in the live-streaming announcement, and can further attract more users to enter the live-streaming room of the anchor.

The above process is a process of generating the live-streaming announcement based on the basic live-streaming information and the article announcement information. In some other embodiments, the first terminal can further set other information, and then generate a live-streaming announcement of the target live-streaming plan based on the newly set information. A corresponding process is as follows:

(1) In some embodiments, the first terminal acquires an announcement cover of the target live-streaming plan, in response to a cover set operation on the target live-streaming plan. In this embodiment, by performing the cover set operation, the announcement cover of the target live-streaming plan can be acquired, and then this announcement cover can be displayed when the live-streaming announcement is displayed, thereby improving the display effect of the live-streaming announcement.

In some embodiments, the information setting page includes a cover set control. Accordingly, the process shown in (1) includes: displaying, by the first terminal, at least one candidate cover in response to a trigger operation on the cover set control, and taking a selected candidate cover as the announcement cover of the target live-streaming plan in response to a select operation on any candidate cover of the at least one candidate cover.

In some embodiments, the first terminal displays at least one history announcement cover of the live-streaming room in response to a trigger operation on the cover set control, and takes a selected history announcement cover as the announcement cover of the target live-streaming plan in response to a select operation on any history announcement cover of the at least one history announcement cover. In some embodiments, the users can select a cover picture that has been uploaded in the history live-streaming. In some other embodiments, at least one picture stored locally is displayed in response to a trigger operation on the cover set control; and a selected picture is taken as the announcement cover of the target live-streaming plan in response to a select operation on any picture of the at least one picture. In some embodiments, the cover picture is uploaded based on a schematic cover specification and the cover picture is taken as the cover of the current live-streaming announcement.

For example, referring to FIG. 7, the cover set control is an "Upload cover picture" control 707 shown in FIG. 7. In some embodiments, the first terminal displays a cover condition on the information setting page, wherein the cover condition indicates a condition that the uploaded cover should satisfy, such that the user can be reminded to upload a picture that satisfies a cover condition.

In some embodiments, the first terminal acquires the input cover in response to a cover set operation on the target live-streaming plan, and determines the cover as the announcement cover of the target live-streaming plan in the case that the cover satisfies the cover condition. By determining whether the cover satisfies the cover condition, it is ensured that the uploaded cover is a cover that satisfies the cover condition, and the display effect of the cover is ensured.

In some embodiments, the process that the first terminal determines whether the input cover satisfies the cover condition includes at least one of the following operations.

First, the first terminal determines, based on the picture size of the cover, whether a picture size of the cover has reached a threshold of picture size. In the case that the picture size of the cover reaches the threshold of picture size, the cover does not satisfy the cover condition; and in the case that the picture size of the cover fails to reach the threshold of picture size, the cover satisfies the cover condition. In some embodiments, the threshold of picture size is a predetermined fixed threshold. For example, in the case that the threshold of picture size is 3M, reaching the threshold of picture size means that the picture size is greater than or equal to 3M, and failing to reach the threshold of picture size means that the picture size is less than 3M. By verifying the picture size of the cover, it is ensured that the input picture satisfies a picture size requirement.

Second, the first terminal determines, based on a picture clarity of the cover, whether the picture clarity of the cover reaches a threshold of picture clarity. In the case that the picture clarity of the cover reaches the threshold of picture clarity, the cover satisfies the cover condition; and in the case that the picture clarity of the cover fails to reach the threshold of picture clarity, the cover does not satisfy the cover condition. In some embodiments, the threshold of picture clarity is a threshold of resolution. For example, in the case that the threshold of picture clarity is 100PPI, reaching the threshold of picture clarity means the picture clarity is greater than or equal to 100PPI, and failing to reach the threshold of picture clarity means the picture clarity is less than 100PPI. By verifying the picture clarity of the cover, it is ensured that the input picture satisfies a clarity requirement.

Third, the first terminal recognizes the picture of the cover, and verifies text information and picture content included in the cover. In the case that the text information and the picture content satisfy the content condition, the cover satisfies the cover condition; and in the case that any one of the text information and the picture content does not satisfy the content condition, the cover does not satisfy the cover condition. By verifying the text information and picture content in the picture, it is ensured that the input picture satisfies the content condition, thereby ensuring the security and reliability of the live-streaming announcement.

(2) In some embodiments, the first terminal acquires a preview video of the target live-streaming plan in response to a video set operation on the target live-streaming plan. By performing the video set operation, the preview video of the target live-streaming plan can be acquired, and then the preview video can be played when the live-streaming announcement is displayed, thereby improving the display effect of the live-streaming announcement.

In some embodiments, the information setting page includes a video set control. At least one candidate video is displayed in response to a trigger operation on the video set control; and the selected candidate video is taken as the preview video of the target live-streaming plan in response to a select operation on any candidate video of the at least one candidate video. Referring to FIG. 7, the video set control is a "Select an existing video" control 708 shown in FIG. 7.

In some embodiments, the first terminal acquires the input video in response to a video set operation on the target live-streaming plan, and in the case that this video satisfies a video condition, this video is determined as the preview video of the target live-streaming plan. By determining whether the video satisfies the video condition, it is ensured that the uploaded video is a video that satisfies the video condition, and the playback effect of the video is ensured.

In some embodiments, the process that the first terminal determines whether the input video satisfies the video condition includes at least one of the following operations.

First, the first terminal determines, based on a video size of the video, whether a video size of the video has reached a threshold of video size. In the case that the video size of the video reaches the threshold of video size, the video does not satisfy the video condition; and in the case that the video size of the video fails to reach the threshold of video size, the video satisfies the video condition. In some embodiments, the threshold of video size is a predetermined fixed threshold. For example, in the case that the threshold of video size is 500M, reaching the threshold of video size means that the video size is greater than or equal to 500M, and failing to reach the threshold of video size means that the video size is less than 500M. By verifying the video size of the video, it is ensured that the uploaded video satisfies a video size requirement.

Second, the first terminal determines, based on a video clarity of the video, whether the video clarity of the video reaches a threshold of video clarity. In the case that the video clarity of the video reaches the threshold of video clarity, the video satisfies the video condition; and in the case that the video clarity of the video does not reach the threshold of video clarity, the video does not satisfy the video condition. In some embodiments, the threshold of video clarity is a threshold of resolution. For example, in the case that the threshold of video clarity is 200PPI, said reaching the threshold of video clarity means the video clarity is greater than or equal to 200PPI, and said not reaching the threshold of video clarity means the video clarity is less than 200PPI. By verifying the video clarity of the video, it is ensured that the input video satisfies a clarity requirement.

Third, the first terminal acquires a video content of the video, and determines whether video clips of the video satisfy a content condition. In the case that a video clip of the video does not satisfy the content condition, the video does not satisfy the video condition; and in the case that all the video clips of the video satisfy the content condition, the video satisfies the video condition. By verifying the video whether it satisfies the content condition, it is ensured that the input video satisfies the content condition, thereby ensuring the security and reliability of the live-streaming announcement.

In some embodiments, the information setting page includes an announcement generate control. In the case that the basic live-streaming information and article announcement information are acquired, the first terminal performs the process of generating the live-streaming announcement based on the basic live-streaming information and the article announcement information, in response to a trigger operation on the announcement generate control.

For example, referring to FIG. 7, the announcement generate control is a "Save" control 709 shown in FIG. 7. In some embodiments, the information setting page further includes a preview control, and the first terminal displays the generated live-streaming announcement in response to a trigger operation on the preview control. In this way, it is convenient to know a display effect of the live-streaming announcement. For example, referring to FIG. 7, the preview control is a "Preview" control 710 shown in FIG. 7.

In some embodiments, in the case that the plan content of the target live-streaming plan is acquired, the first terminal verifies the plan content of the target live-streaming plan, and performs the process of generating the live-streaming announcement of the target live-streaming plan in the case that the verification of the plan content is successful. In some embodiments, the first terminal verifies the plan content of the target live-streaming plan, i.e., the first terminal verifies the basic live-streaming information and article announcement information of the live-streaming announcement; and in the case that the verification is successful, the live-streaming announcement of the target live-streaming plan is generated based on the basic live-streaming information and the article announcement information of the target live-streaming plan. By verifying the plan content, it is ensured that the plan content is a content in line with the specifications, and the security and reliability of generated the live-streaming announcement is ensured.

In some embodiments, the article plan in the plan content is verified, or the basic plan information in the plan content is verified. In some embodiments, the basic live-streaming information generated based on the basic plan information is verified, or the article announcement information generated based on the article plan is verified. The process of verifying the article plan includes: determining whether all of the at least one article included in the article plan satisfy article specifications; and in the case that an article in the at least one article does not satisfy the article specifications, the verification is failed; and in the case that all of the at least one article satisfy the article specification, the verification is successful. By verifying the articles, it is ensured that the articles to be announced during the live-streaming satisfy the article specifications, thereby ensuring the security and reliability of the live-streaming announcement. The process of verifying the basic plan information in the plan content is the same as the process of verifying the text based on a target text set mentioned above, which is not repeated here. It should be noted that the verification processes mentioned above are performed by the first terminal or the server. For example, the verification processes mentioned above are performed by the terminal (in terms of text verification, cover verification or video verification) during the process of information setting; or, the verification processes are uniformly performed by the server after the information setting is completed. Timing of performing the verification processes are not limited in the embodiments of the present disclosure.

In 408, the first terminal sends a live-streaming announcement release request to the server, wherein the live-streaming announcement release request requests the server to release the live-streaming announcement to at least one user account.

The live-streaming announcement release request carries the live-streaming announcement of the target live-streaming plan.

In some embodiments, the information setting page includes a release control, and the first terminal sends a live-streaming announcement release request in response to a trigger operation on the release control. Referring to FIG. 7, the release control is a "Release an announcement" control 711 shown in FIG. 7. By releasing the live-streaming announcement by the server, the live-streaming announcement is popularized, such that the subsequent push and display of the live-streaming is facilitated, thereby improving the popularization efficiency of the live-streaming, attracting more users to enter the live-streaming room, and further increasing the user conversion rate in the live-streaming room.

In 409, the server receives the live-streaming announcement release request and release the live-streaming announcement.

In some embodiments, the server receives the live-streaming announcement release request, acquires the live-streaming announcement of the target live-streaming plan from a specific field of the live-streaming announcement release request, and releases the live-streaming announcement.

In some embodiments, the server releases the live-streaming announcement based on at least one presentation position. In some embodiments, the presentation position includes at least one of: an interface of the live-streaming room, a personal page of the account of the anchor, a shop associated with the live-streaming room, an event page associated with the live-streaming room, an account group (such as a fans club of the account of the anchor) associated with the live-streaming room, a recommendation page of the live-streaming application client, a search page of the live-streaming application client and a share page.

The personal page of the account of the anchor refers to an information presentation page of the account of the anchor, wherein the information presentation page includes account information of the account of the anchor and released moments, such as a released live-streaming announcement or history live-streaming data. The shop associated with the live-streaming room refers to at least one merchant shop associated with the target live-streaming plan of the live-streaming room. In some embodiments, one anchor corresponds to one merchant shop in one live-streaming plan, and in some other embodiments, one anchor corresponds to a plurality of merchant shops in one live-streaming plan, which is not limited in the embodiments of the present disclosure. The event page associated with the live-streaming room refers to an event page associated with a current live-streaming plan of the live-streaming room. The event page includes live-streaming data of at least one live-streaming room related to a target event. For example, in the case that the target event is a special session for New Year's shopping, the event page includes a live-streaming announcement or live-streaming data for the live-streaming of articles for New Year's shopping. The recommendation page of the live-streaming application client includes at least one recommended media resource, for example, a recommended live-streaming announcement, a short video, or a live-streaming room and the like. The search page of the live-streaming application client displays media resources corresponding to a search term based on a search operation, for example, a live-streaming announcement, a short video or a live-streaming room corresponding to the search term. The share page refers to a page that is jumped to via a share link, and the share page includes a live-streaming announcement corresponding to the share link.

In the process mentioned above, by releasing the live-streaming announcement at different presentation positions, the live-streaming announcement is widely released, and the possibility of following the live-streaming announcement is increased, such that more users are attracted to enter the live-streaming room.

In 410, the second terminal acquires the live-streaming announcement of the live-streaming room, wherein the live-streaming announcement is acquired based on the target live-streaming plan.

In 411, the second terminal displays the live-streaming announcement in response to a trigger operation on the live-streaming announcement, wherein the live-streaming announcement includes plan content of the target live-streaming plan.

Based on the different presentation positions of the live-streaming announcement in 409, a process for the second terminal to acquire and display the live-streaming announcement of the live-streaming room is different. The processes corresponding to different presentation positions are as follows.

(1) In some embodiments, the second terminal sends an access request to the server in response to an access operation on the live-streaming room. In response to receiving the access request, the server returns the live-streaming announcement of the live-streaming room to the second terminal. Then, the second terminal acquires the live-streaming announcement of the live-streaming room, and displays the live-streaming announcement on the interface of the live-streaming room.

(2) In some embodiments, the second terminal sends a view request to the server in response to a view operation on the personal page of the account of the anchor. In response to receiving the view request, the server returns the live-streaming announcement of the live-streaming room to the second terminal. Then, the second terminal acquires the live-streaming announcement of the live-streaming room, and displays the live-streaming announcement on the personal page of the account of the anchor.

(3) In some embodiments, the second terminal sends a view request to the server in response to a view operation on the shop associated with the live-streaming room. In response to receiving the view request, the server returns the live-streaming announcement of the live-streaming room to the second terminal. Then, the second terminal acquires the live-streaming announcement of the live-streaming room, and displays the live-streaming announcement in the shop.

(4) In some embodiments, the second terminal sends a view request to the server in response to a view operation on the event page associated with the live-streaming room. In response to receiving the view request, the server returns the live-streaming of the live-streaming room to the second terminal. Then, the second terminal acquires the live-streaming announcement of the live-streaming room, and displays the live-streaming announcement on the event page.

(5) In some embodiments, the second terminal sends a view request to the server in response to a view operation on the account group associated with the live-streaming room. In response to receiving the view request, the server returns the live-streaming announcement of the live-streaming room to the second terminal. Then, the second terminal acquires the live-streaming announcement of the live-streaming room, and displays the live-streaming announcement in the account group associated with the live-streaming room.

(6) In some embodiments, the second terminal sends a view request to the server in response to a view operation on the recommendation page of the live-streaming application client. In response to receiving the view request, the server returns the live-streaming announcement of the live-streaming room to the second terminal. Then, the second terminal acquires the live-streaming announcement of the live-streaming room, and displays the live-streaming announcement on the recommendation page.

(7) In some embodiments, the second terminal sends a search request to the server in response to a search operation for related information of the live-streaming announcement performed on the live-streaming application client. In response to receiving the search request, the server returns the live-streaming announcement of the live-streaming room to the second terminal. Then, the second terminal acquires the live-streaming announcement of the live-streaming room, and displays the live-streaming announcement on the search page of the live-streaming application client.

(8) In some embodiments, in the case that the second terminal receives a live-streaming announcement shared by a friend account, the second terminal displays the live-streaming announcement on the share page in response to a view operation on the live-streaming announcement.

In the processes mentioned above, by releasing the live-streaming announcement at different presentation positions, the live-streaming announcement is widely released, and the possibility of following the live-streaming announcement is increased, such that more users are attracted to enter the live-streaming room.

In 412, the second terminal displays a first subscription entry, wherein the live-streaming announcement is associated with the first subscription entry, and the first subscription entry allows a user account to subscribe for a start-up reminder of the live-streaming room.

It should be noted that, the live-streaming announcement released by the server to the at least one user account is associated with a first subscription entry, wherein the first subscription entry allows the at least one user account to subscribe for a start-up reminder of the live-streaming room.

In the embodiments of the present disclosure, the start-up reminder of the live-streaming room can be subscribed through the first subscription entry, such that the users are provided with a convenient reminder function, and do not need to manually check whether the live-streaming room starts, thereby improving the efficiency of human-computer interaction.

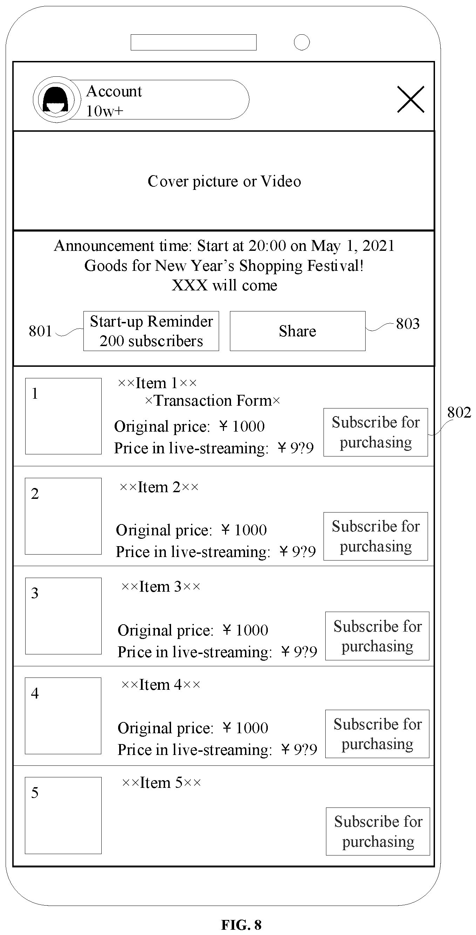

For example, FIG. 8 is a schematic diagram of a live-streaming announcement according to an embodiment of present disclosure. Referring to FIG. 8, the first subscription entry is a "Start-up Reminder" control 801 shown in FIG. 8. In some embodiments, reminder information on a number of subscribers is displayed in the first subscription entry, and the reminder information on the number of subscribers refers to "200 subscribers" shown in FIG. 8. In this way, the users can be attracted to follow the live-streaming announcement, thereby increasing the possibility of making subscriptions by the users.

In 413, the second terminal sends a first subscribe request to the server in response to a trigger operation on the first subscription entry, wherein the first subscribe request triggers the server to remind the user account before the live-streaming starts in the live-streaming room.

In 414, the server receives the first subscribe request and sends the start-up reminder to the second terminal before the live-streaming starts in the live-streaming room, wherein the start-up reminder reminds the user account that the live-streaming is about to start in the live-streaming room.

In some embodiments, the server receives the first subscribe request, acquires a user account carried in the first subscribe request, and generates a subscription record based on the user account and the live-streaming room. The subscription record records an association relationship between the account and the live-streaming room. Then, before a live-streaming starts in the live-streaming room, a plurality of accounts (the plurality of accounts include the user account logged in by the second terminal) that have subscribed for the start-up reminder of the live-streaming room are determined based on the live-streaming room and the subscription record, and start-up reminders are sent to terminals corresponding to the plurality of accounts.

In some embodiments, a process for the server to send the start-up reminder to the second terminal includes at least one of the following processes.

In some embodiments, the server sends a message to the second terminal before the live-streaming starts in the live-streaming room, wherein the message carries the start-up reminder. For example, the message is a short message service (SMS) message. In some embodiments, the server can acquire, based on a user account currently logged in by the second terminal, a mobile phone number associated with the user account, and then, sends the start-up reminder to the second terminal in the form of an SMS message based on the mobile phone number. By sending the start-up reminder by means of the SMS message, the user can be timely reminded that the live-streaming is about to start in the live-streaming room, thereby improving the efficiency of human-computer interaction.

In some embodiments, the server sends a client reminder message to the second terminal before the live-streaming starts in the live-streaming room, wherein the client reminder message carries the start-up reminder. The client reminder message refers to a virtual conversation between the account of the anchor and a subscriber account. For example, the client reminder message is a private message. In some embodiments, the server sends a start-up reminder to the second terminal in the form of the private message in the live-streaming application client. By sending the start-up reminder by means of the client reminder, the effect of the start-up reminder can be ensured.

In some embodiments, the server sends a first reminder message to the second terminal before the live-streaming starts in the live-streaming room, wherein the first reminder message indicates that the start-up reminder is to be displayed in the form of a push message on the client.

In some embodiments, the server sends a second reminder message to the second terminal before the live-streaming starts in the live-streaming room, wherein the second reminder message indicates that the start-up reminder is to be displayed in the form of an alarm clock reminder or a calendar reminder.

In the processes mentioned above, with user authorization, the server sends the start-up reminder to user accounts that have subscribed for the start-up reminder, by means of a system alarm clock, a system calendar, an SMS message, a private message, a push message and the like. In some embodiments, for on-line logged-in user accounts, the start-up reminder is sent to users who have subscribed for the start-up reminder, by means of the system alarm clock, the system calendars, the private message, or the push message; and for off-line user accounts, the start-up reminder is sent to users who have subscribed for the start-up reminder, by means of the SMS message. Through the above processes, the start-up reminder is sent by the server, such that the users can be provided with a convenient reminder function, and do not need to manually check whether the live-streaming starts in the live-streaming room, thereby improving the efficiency of human-computer interaction and increasing the users' experience in watching the live-streaming. Moreover, by sending the start-up reminder by means of the system alarm clock, the SMS message, the private message, the push message and the like, not only the efficiency of the start-up reminder is improved, but also comprehensive reminder to the user account can be ensured, thereby increasing the popularity of the live-streaming room.

In 415, the second terminal receives and displays a start-up reminder, wherein the start-up reminder is sent by the server based on the first subscribe request.

In some embodiments, a process for the second terminal to receive the start-up reminder includes at least one of: (1) receiving, by the second terminal, a message sent by the server; (2) receiving, by the second terminal, a client reminder message sent by the server; (3) in response to receiving the first reminder message, displaying, by the second terminal, the start-up reminder by means of a push message on the client; and (4) in response to receiving the second reminder message, displaying, by the second terminal, the start-up reminder by means of the alarm clock reminder or the calendar reminder. By realizing the start-up reminder through the push message on the client, the alarm clock reminder or the calendar reminder, the forms of the start-up reminder are enriched.

The processes mentioned above are the processes in which the users subscribe for the start-up reminder and the server then sends a start-up reminder message to the second terminal. In some other embodiments, the server can further send the start-up reminder to the first terminal to remind the anchor to open the live-streaming room. For example, the server reminds the anchor to start to do the live-streaming 30 minutes, 10 minutes or 0 minutes before a start-up time, and in response to exceeding 10 minutes, the server reminds the anchor to start to do the live-streaming as soon as possible since the live-streaming is about to expire.

The processes 412 to 415 mentioned above describe the processes of subscribing for the start-up reminder based on the first subscription entry. In some other embodiments, the live-streaming announcement released by the server to at least one user account is associated with at least one second subscription entry. Accordingly, the second terminal displays the at least one second subscription entry, wherein one second subscription entry corresponds to one article in the live-streaming announcement. The second subscription entry allows the user account to subscribe for the article corresponding to the second subscription entry. In response to a trigger operation on any second subscription entry of the at least one second subscription entry, a second subscribe request is sent to the server, wherein the second subscribe request triggers the server to perform the subscription of the user account for the article corresponding to the second subscription entry. By the at least one second subscription entry, the article may be subscribed for, which achieves the automatic purchase of the article, such that the user can purchase the article more conveniently, thereby improving the efficiency of human-computer interaction.

For example, referring to FIG. 8, the second subscribe entry is a "Subscribe for purchasing" entry 802 shown in FIG. 8. In some embodiments, the second terminal displays a share control in the live-streaming announcement, and the second terminal sends the live-streaming announcement to a corresponding share object in response to a trigger operation on the share control. In some embodiments, the share object is a friend account of the currently logged-in account, or a group of the currently logged-in account. Referring to FIG. 8, the share control is a "Share" control 803 shown in FIG. 8. Through the share control, it is convenient for the current account logged in by the second terminal to share the live-streaming announcement with other accounts.

The embodiments of the present disclosure provide a function of automatically creating a live-streaming announcement, which improves the efficiency in creating the live-streaming announcement; and by displaying the live-streaming announcement, the live-streaming room can be warmed up in advance, and attract more users to enter the live-streaming room of the anchor, thereby increasing the user traffic of the live-streaming room and further increasing a user conversion rate.

For the live-streaming announcement list page involved in FIG. 4, the embodiment shown in FIG. 4 introduces a process in which the first terminal creates a live-streaming announcement based on the live-streaming announcement list page. In some embodiments, referring to FIG. 5, the live-streaming announcement list page includes at least one created live-streaming announcement in the live-streaming room. In some embodiments, the first terminal displays the basic live-streaming information of the at least one live-streaming announcement on the live-streaming announcement list page. For example, in a "Start-up Time" bar 503 on the live-streaming announcement list page, the live-streaming time of the at least one live-streaming announcement is displayed; and in a "Live-streaming Title" bar 504 on the live-streaming announcement list page, the live-streaming title of the at least one live-streaming announcement is displayed. In some embodiments, the first terminal displays article announcement information of the at least one live-streaming announcement on the live-streaming announcement list page. For example, in a "Number of Commodities in Announcement" bar 505 on the live-streaming announcement list page, the number of the commodities in announcement in the at least one live-streaming announcement is displayed.

Further, based on the live-streaming announcement list page, the first terminal can further perform at least one of following processes.

(1) In some embodiments, the first terminal displays a total number of accounts, that have subscribed for the start-up reminder, in the at least one live-streaming announcement. For example, referring to FIG. 5, in a "Number of Subscribers" bar 506 on the live-streaming announcement list page, the total number of accounts that have subscribed for the start-up reminder is displayed.

(2) In some embodiments, the first terminal displays the at least one live-streaming announcement and at least one release state, wherein one release state corresponds to one live-streaming announcement, and the release state includes a pending release state, a released state, or a revoked state. By displaying the release state of the created live-streaming announcement, it is convenient to know the release state of the live-streaming announcement in time, and the amount of information on the live-streaming announcement list page is increased, thereby facilitating the subsequent adjustments and planning based on release states.

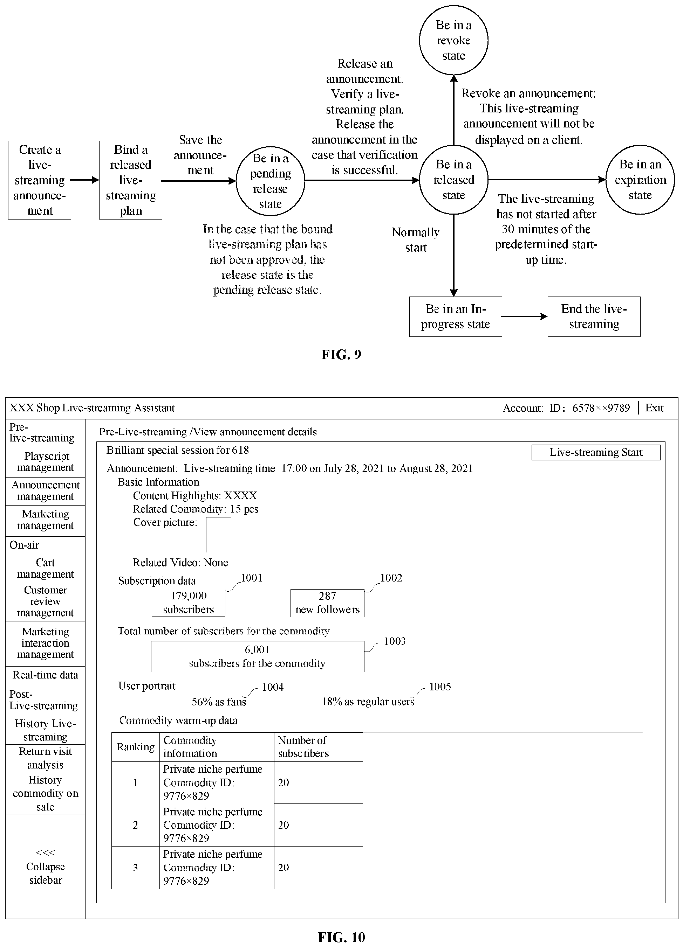

In some embodiments, referring to FIG. 9, FIG. 9 is a schematic diagram of the state of a live-streaming announcement according to an embodiment of present disclosure. By interacting with the server, the first terminal can acquire release state data of at least one created live-streaming announcement in the live-streaming room, and then update and display the release state of the at least one created live-streaming announcement based on the release state data of the live-streaming announcement.

In some embodiments, in the case that an operation on the announcement create control is performed and the server does not release the live-streaming announcement, the first terminal displays the release state of the live-streaming announcement as a pending release state on the live-streaming announcement list page. For example, in the case that the anchor has created and saved the live-streaming announcement, and the live-streaming plan bound to the live-streaming announcement has not been approved, the release state of the live-streaming announcement is the pending release state.

In some embodiments, in the case that the server has released the live-streaming announcement, the first terminal displays the release state of the live-streaming announcement as a released state on the live-streaming announcement list page. For example, in the case that the live-streaming plan bound to the live-streaming announcement created by the anchor is approved, the server releases the live-streaming announcement, and the release state of the live-streaming announcement is in the released state at this time.

In some embodiments, in response to performing a release revoke operation on the live-streaming announcement, the first terminal displays the release state of the live-streaming announcement as a revoked state on the live-streaming announcement list page. It should be understood that in the case that the anchor revokes the release of the live-streaming announcement, other clients cannot display the live-streaming announcement. In some embodiments, the announcement creation window further includes a release revoke control, wherein the release revoke control is configured to revoke the release of the live-streaming announcement. Referring to FIG. 6, the release revoke control is a "Cancel" control 603 shown in FIG. 6.

(3) In some embodiments, the first terminal displays the at least one live-streaming announcement and at least one live-streaming state, wherein one live-streaming state corresponds to one live-streaming announcement, and the live-streaming state includes an un-started state, an in-progress state, an end state or an expiration state. By displaying the live-streaming state of the created live-streaming announcement, it is convenient to know the live-streaming state of the live-streaming announcement in time, and the amount of information on the live-streaming announcement list page is increased, thereby facilitating adjustments and planning based on the live-streaming states.

In some embodiments, referring to FIG. 9, the first terminal can acquire live-streaming state data of at least one created live-streaming announcement in the live-streaming room by interacting with the server, and then update and display the live-streaming state of the at least one live-streaming announcement based on the live-streaming state data.

In some embodiments, in the case that the account of the anchor starts the live-streaming, the first terminal displays the live-streaming state of the live-streaming announcement as the in-progress state on the live-streaming announcement list page. For example, in the case that the anchor starts the live-streaming at the start-up time, the live-streaming state of the live-streaming announcement is the in-progress state.

In some embodiments, in the case that the account of the anchor ends the live-streaming, the first terminal displays the live-streaming state of the live-streaming announcement as the end state on the live-streaming announcement list page.

In some embodiments, in the case that the account of the anchor does not start the live-streaming within a target time period after the start-up time, the first terminal displays the live-streaming state of the live-streaming announcement as the expiration state on the live-streaming announcement list page. For example, in the case that the anchor has not started the live-streaming 30 minutes after the start-up time, the live-streaming state of the live-streaming announcement is the expiration state.

For example, referring to FIG. 5, in an "Announcement State" bar 507 on the live-streaming announcement list page, the release state or live-streaming state of the at least one live-streaming announcement is displayed.

(4) In some embodiments, the first terminal displays the details page of the live announcement in response to an operation of viewing details of any live-streaming announcement of the at least one live-streaming announcement. By performing the operation of viewing the details of the live-streaming announcement, the details page of the live-streaming announcement can be displayed, thereby facilitating the understanding of the details of the live-streaming announcement, reducing the operating cost, and improving the display efficiency of the details page.

In some embodiments, the live-streaming announcement list page includes at least one announcement details control, wherein one created live-streaming announcement corresponds to one announcement details control. In response to performing a trigger operation on any announcement details control of the at least one announcement details control, the details page of the live-streaming announcement corresponding to the announcement details control is displayed. Referring to FIG. 5, the announcement details control is an "Announcement Details" control 508 in FIG. 5.

(5) In some embodiments, the live-streaming announcement list page includes at least one link copy control, wherein one created live-streaming announcement corresponds to one link copy control. In response to performing a trigger operation on the link copy control, a share panel including a plurality of share objects pops up; and in response to performing a trigger operation on any share object of the plurality of share objects, a copied link is sent to the share object. In some embodiments, the share object is a friend account of the currently logged-in account, or a group of the currently logged-in account. Referring to FIG. 5, the link copy control is a "Copy Link" control 509 in FIG. 5. Through the link copy control, it is convenient for the account of the anchor logged in by the first terminal to share the live-streaming announcement with other accounts.

(6) In some embodiments, the first terminal displays a live-streaming watch control corresponding to the live-streaming announcement that is in the in-progress state or the end state. In response to performing the trigger operation on the live-streaming watch control, the first terminal displays an associated live-streaming video of the live-streaming announcement. Referring to FIG. 5, the live-streaming watch control is a "Live-streaming Data" control 510 in FIG. 5. In the case that the live-streaming announcement is in the in-progress state, the associated live-streaming video is a video undergoing live-streaming currently; and in the case that the live-streaming announcement is in the end state, the associated live video is a live-streaming playback video. By triggering the live-streaming watch control, the associated live-streaming video corresponding to the live-streaming announcement can be quickly displayed, thereby reducing the operating cost and improving the display efficiency of the associated live-streaming video.

Referring to FIG. 10, FIG. 10 is a schematic diagram of a details page according to an embodiment of present disclosure. For the details page of the live-streaming announcement involved in the process (4) mentioned above, the first terminal can further perform other processes, which are shown in Embodiments (1) to (10).

(1) In some embodiments, the first terminal displays first subscription data information on the details page of the live-streaming announcement, wherein the first subscription data information includes at least one of a total number of user accounts that have subscribed for the start-up reminder, and a number of user accounts that have subscribed for the start-up reminder based on each presentation position. Referring to FIG. 10, the total number of accounts is shown as the number of subscribers 1001 in FIG. 10. By displaying the first subscription data information, it is convenient to know the subscription situation of the start-up reminder, and the amount of information of the details page is increased.

(2) In some embodiments, the first terminal displays the number of new accounts, that follow the live-streaming room based on the live-streaming announcement, on the details page of the live-streaming announcement. Referring to FIG. 10, the number of new accounts is shown as the number of new followers 1002 in FIG. 10.

(3) In some embodiments, the first terminal displays second subscription data information on the details page of the live-streaming announcement, wherein the second subscription data information includes a number of subscriber user accounts corresponding to the at least one article in the live-streaming announcement. Referring to FIG. 10, in the "Number of Subscribers" bar of the commodity warm-up data, the subscriber user account quantities corresponding to each article to be traded is displayed. By displaying the second subscription data information, it is possible to know the subscription situation of each article to be traded in the live-streaming room, the amount of information of the details page is increased, and the arrangement of live-streaming scripts and marketing methods in advance based on the subscription popularity of each article is facilitated, thereby increasing the conversion rate.

In some embodiments, the first terminal displays the total number of accounts, that have subscribed the articles to be traded in the live-streaming room, on the details page of the live-streaming announcement. Referring to FIG. 10, the total number of accounts is shown as the number of subscribers for the commodity 1003 in FIG. 10.

(4) In some embodiments, a first proportion is displayed on the details page of the live-streaming announcement, wherein the first proportion is a proportion of the user accounts that have followed an account of an anchor of the live-streaming room, among the user accounts that have subscribed for the start-up reminder. For example, the user accounts that have followed the account of the anchor of the live-streaming room are fans of the anchor. A second proportion is displayed on the details page of the live-streaming announcement, wherein the second proportion is a proportion of user accounts that have undergone an article transaction event based on articles associated with the account of the anchor of the live-streaming room, among the user accounts that have subscribed for the start-up reminder. The articles associated with the account of the anchor of the live-streaming room are articles in the shop of the anchor of the live-streaming room. For example, the user accounts that have undergone an article transaction event based on the articles associated with the account of the anchor of the live-streaming room are regular users who have purchased articles in the shop of the anchor. Referring to FIG. 10, the first proportion and the second proportion are displayed in a user portrait region shown in FIG. 10. The first portion is shown as the proportion of fans 1004 in FIG. 10, and the second proportion is shown as the proportion of regular users 1005 in FIG. 10. By displaying the first proportion and the second proportion, it is convenient to know the subscription situation of the following accounts and regular users for the start-up reminder, and the amount of information of the details page is increased.

(5) The first terminal displays presentation data information on the details page of the live-streaming announcement after the live-streaming announcement is released, wherein the presentation data information includes at least one of a total number of presentation times of the live-streaming announcement and a number of presentation times of the live-streaming announcement at each presentation position. In some embodiments, the presentation data information is exposure data information. By displaying the presentation data information, it is convenient to know the presentation situation of the live-streaming announcement, and the amount of information of the details page is increased.

(6) In some embodiments, the first terminal displays a first account subscription rate for the live-streaming room on the details page of the live-streaming announcement, wherein the first account subscription rate indicates a proportion of user accounts that have undergone an article transaction event, among the user accounts that have subscribed for the start-up reminder. By displaying the first account subscription rate, a number of accounts that have undergone the article transaction events, among the accounts that have subscribed for the start-up reminder in the live-streaming room, may be acquired, such that the understanding of the article transaction events generated during the current live-streaming is facilitated and the amount of information of the details page is increased.

(7) In some embodiments, the first terminal displays a second account subscription rate for the live-streaming announcement at each presentation position, on the details page of the live-streaming announcement, wherein the second account subscription rate indicates a proportion of the user accounts that have undergone the article transaction event, among the user accounts that have subscribed for the start-up reminder at the presentation position. By displaying the second account subscription rate, a number of accounts that have undergone the article transaction events, among the accounts that have subscribed for the start-up reminder at each presentation position, may be acquired, such that the understanding of the article transaction events generated at each presentation position during the current live-streaming is facilitated and the amount of information of the details page is increased.

(8) In some embodiments, the first terminal displays a first live-streaming recall rate for the live-streaming room on the details page of the live-streaming announcement, wherein the first live-streaming recall rate indicates a proportion of user accounts that have entered the live-streaming room, among the user accounts that have subscribed for the start-up reminder. By displaying the first live-streaming recall rate, a number of accounts that have entered the live-streaming room, among the accounts that have subscribed for the start-up reminder in the live-streaming room, may be acquired, such that the understanding of the recall situation of subscribers during the current live-streaming is facilitated and the amount of information of the details page is increased.

(9) In some embodiments, the first terminal displays a second live-streaming recall rate of the live-streaming announcement at each presentation position, on the details page of the live-streaming announcement, wherein the second live-streaming recall rate indicates a proportion of the user accounts that have entered the live-streaming room, among the user accounts that have subscribed for the start-up reminder at the presentation position. By displaying the second live-streaming recall rate, a number of accounts that have entered the live-streaming room, among the accounts that have subscribed for the start-up reminder at each presentation position, may be acquired, such that the understanding of the recall situation of subscribers at each presentation position during the current live-streaming is facilitated and the amount of information of the details page is increased.

(10) In some embodiments, the first terminal displays, on the details page of the live-streaming announcement, the proportion of new following user accounts among the user accounts that have subscribed for the start-up reminder, and the proportion of new following user accounts among user accounts that have not subscribed for the start-up reminder. By performing this process, the account conversion between the user accounts that have subscribed for the start-up reminder and the user accounts that have not subscribed for the start-up reminder can be displayed visually, and the amount of information of the details page is increased.

It should be noted that the (6) to (10) mentioned above are processes that are displayed on the details page of the live-streaming announcement. In some other embodiments, in response to the live-streaming being started in the live-streaming room, the first terminal displays the information in the (6) to (10) during the current live-streaming in the live-streaming room. In this way, the anchor can view relevant data based on the live-streaming announcement in time during the live-streaming. Alternatively, in the case that the live-streaming in the live-streaming room is ended, the first terminal displays the information in the (6) to (10) during the current live-streaming on the details page of the live-streaming announcement. In this way, the live-streaming recall rate and the account subscription rate of the current live-streaming are accounted at the end of the live-streaming, which facilitates the anchor to understand the complete situation of the current live-streaming.

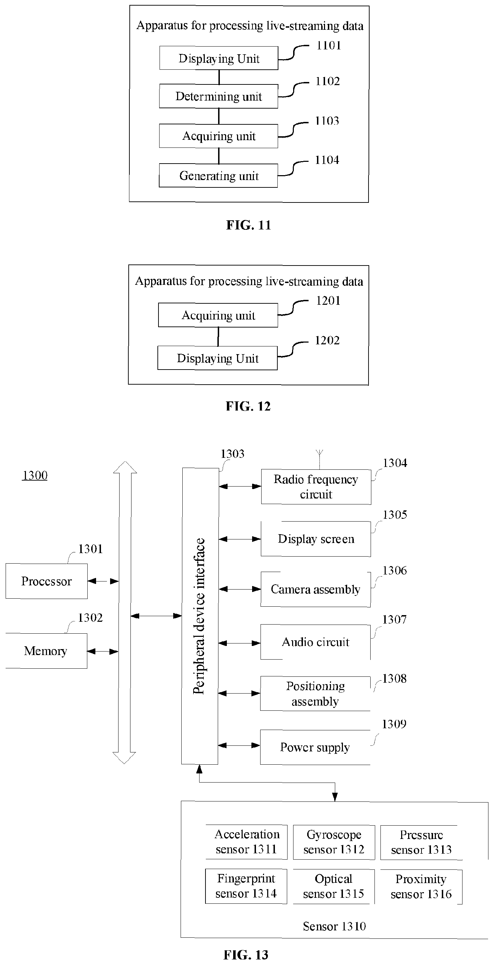

FIG. 11 is a block diagram of an apparatus for processing live-streaming data according to an embodiment of present disclosure. Referring to FIG. 11, the apparatus includes a displaying unit 1101, a determining unit 1102, an acquiring unit 1103, and a generating unit 1104.

The displaying unit 1101 is configured to display at least one live-streaming plan of a live-streaming room, wherein the live-streaming plan indicates a plan for posting an article in the live-streaming room.

The determining unit 1102 is configured to determine a target live-streaming plan in response to a select operation on the at least one live-streaming plan.

The acquiring unit 1103 is configured to acquire plan content of the target live-streaming plan in response to an announcement set operation on the target live-streaming plan, wherein the plan content includes an article plan, and the article plan involves at least one article.

The generating unit 1104 is configured to generate a live-streaming announcement of the target live-streaming plan based on the plan content.

In some embodiments, the plan content further includes basic plan information of the target live-streaming plan, and the generating unit 1104 includes a basic live-streaming information generating subunit, an article announcement information generating subunit and a live-streaming announcement generating subunit.

The basic live-streaming information generating subunit is configured to generate basic live-streaming information of the live-streaming announcement of the target live-streaming plan based on the basic plan information.

The article announcement information generating subunit is configured to generate article announcement information of the live-streaming announcement based on the article plan.

The live-streaming announcement generating subunit is configured to generate the live-streaming announcement based on the basic live-streaming information and the article announcement information.

In some embodiments, the article announcement information generating subunit is configured to: acquire transaction data of a first article in response to a transaction form set operation on the first article, wherein the transaction data indicates a transaction form for transacting the first article, and the first article is any article of the at least one article in the article plan; and add the transaction data of the first article to the article announcement information.

In some embodiments, the article announcement information generating subunit is configured to determine an announcement sequence of the at least one article in the article announcement information in response to a sequence adjust operation on the at least one article in the article plan, wherein the announcement sequence indicates a display sequence of the at least one article in the live-streaming announcement.

In some embodiments, the article announcement information generating subunit is configured to add a recommendation tag to a second article in response to a recommend operation on the second article, wherein the second article is any article of the at least one article in the article plan; and

add the second article and the recommended tag of the second article to the article announcement information.

In some embodiments, the apparatus further includes an announcement cover acquiring unit. The announcement cover acquiring unit is configured to acquire an announcement cover of the target live-streaming plan in response to a cover set operation on the target live-streaming plan.

In some embodiments, the apparatus further includes a preview video acquiring unit. The preview video acquiring unit is configured to acquire a preview video of the target live-streaming plan in response to a video set operation on the target live-streaming plan.

In some embodiments, the displaying unit 1101 includes a first displaying subunit and a second displaying subunit.

The first displaying subunit is configured to display a live-streaming announcement list page, wherein the live-streaming announcement page includes an announcement create control.

The second displaying subunit is configured to display the at least one live-streaming plan, in response to an operation on the announcement create control.

In some embodiments, the first displaying subunit is configured to display at least one live-streaming announcement and at least one release state on the live-streaming announcement list page, wherein one release state corresponds to one created live-streaming announcement, and the release state includes a pending release state, a released state, or a revoked state.

In some embodiments, the first displaying subunit is configured to display at least one created live-streaming announcement and at least one live-streaming state on the live-streaming announcement list page, wherein one live-streaming state corresponds to one created live-streaming announcement, and the live-streaming state includes an un-started state, an in-progress state, an end state or an expiration state.

In some embodiments, the apparatus further includes a sending unit.

The sending unit is configured to send a live-streaming announcement release request to a server, wherein the live-streaming announcement release request is configured to request the server to release the live-streaming announcement to at least one user account.

In some embodiments, the apparatus further includes a data information displaying unit.

The data information displaying unit is configured to display presentation data information on a details page of the live-streaming announcement after the live-streaming announcement is released, wherein the presentation data information includes at least one of a total number of presentation times of the live-streaming announcement and a number of presentation times of the live-streaming announcement at each presentation position.

In some embodiments, the live-streaming announcement released to the at least one user account is associated with a first subscription entry, wherein the first subscription entry is configured to allow the at least one user account to subscribe for a start-up reminder of the live-streaming room; and the apparatus further includes a first subscription data information displaying unit.

The first subscription data information displaying unit is configured to display first subscription data information on the details page of the live-streaming announcement, wherein the first subscription data information includes at least one of a total number of user accounts that have subscribed for the start-up reminder, and a number of user accounts that have subscribed for the start-up reminder based on each presentation position.

In some embodiments, the apparatus further includes a proportion displaying unit. The proportion displaying unit is configured to perform at least one of:
displaying a first proportion on the details page of the live-streaming announcement, wherein the first proportion is a proportion of user accounts that have followed an account of an anchor of the live-streaming room, among the user accounts that have subscribed for the start-up reminder; and
displaying a second proportion on the details page of the live-streaming announcement, wherein the second proportion is a proportion of user accounts that have undergone an article transaction event based on articles associated with the account of the anchor of the live-streaming room, among the user accounts that have subscribed for the start-up reminder.

In some embodiments, the apparatus further includes a first account subscription rate displaying unit.

The first account subscription rate displaying unit is configured to display a first account subscription rate for the live-streaming room on the details page of the live-streaming announcement, wherein the first account subscription rate indicates a proportion of user accounts that have undergone an article transaction event, among the user accounts that have subscribed for the start-up reminder.

In some embodiments, the apparatus further includes a second account subscription rate displaying unit.

The second account subscription rate displaying unit is configured to display a second account subscription rate for the live-streaming announcement at each presentation position, on the details page of the live-streaming announcement, wherein the second account subscription rate indicates a proportion of the user accounts that have undergone the article transaction event, among the user accounts that have subscribed for the start-up reminder at the presentation position.

In some embodiments, the apparatus further includes a first live-streaming recall rate displaying unit.

The first live-streaming recall rate displaying unit is configured to display a first live-streaming recall rate for the live-streaming room on the details page of the live-streaming announcement, wherein the first live-streaming recall rate indicates a proportion of user accounts that have entered the live-streaming room, among the user accounts that have subscribed for the start-up reminder.

In some embodiments, the apparatus further includes a second live-streaming recall rate displaying unit.

The second live-streaming recall rate displaying unit is configured to display a second live-streaming recall rate of the live-streaming announcement at each presentation position, on the details page of the live-streaming announcement, wherein the second live-streaming recall rate indicates a proportion of the user accounts that have entered the live-streaming room, among the user accounts that have subscribed for the start-up reminder at the presentation position.

In some embodiments, the live-streaming announcement released to the at least one user account is associated with at least one second subscription entry, wherein one second subscription entry corresponds to one article in the live-streaming announcement, and the second subscription entry is configured to allow the at least one user account to subscribe for the at least one article.

The apparatus further includes a second subscription data information displaying unit. The second subscription data information displaying unit is configured to:
display second subscription data information on the details page of the live-streaming announcement, wherein the second subscription data information includes a number of subscriber user accounts corresponding to the at least one article.

In some embodiments, the generating unit 1104 is configured to:
verify the plan content, and generate the live-streaming announcement based on the plan content in the case that verification of the plan content is successful.

The embodiments of the present disclosure provide a function of automatically creating a live-streaming announcement, which improves the efficiency in creating the live-streaming announcement; and by displaying the live-streaming announcement, the live-streaming room can be warmed up in advance, and attract more users to enter the live-streaming room of the anchor, thereby increasing the user traffic of the live-streaming room and further increasing a user conversion rate.

FIG. 12 is a block diagram of an apparatus for processing live-streaming data according to an embodiment of present disclosure. Referring to FIG. 12, the apparatus includes an acquiring unit 1201 and a displaying unit 1202.

The acquiring unit 1201 is configured to acquire a live-streaming announcement of a live-streaming room, wherein the live-streaming announcement is acquired based on a target live-streaming plan, the target live-streaming plan is any live-streaming plan of at least one live-streaming plan of the live-streaming room, and the live-steaming plan indicates a plan for posting an article in the live-streaming room.

The displaying unit 1202 is configured to display the live-streaming announcement in response to a trigger operation on the live-streaming announcement, wherein the live-streaming announcement includes plan content of the target live-streaming plan, the plan content includes an article plan, and the article plan involves at least one article.

In some embodiments, the displaying unit 1202 is further configured to display a first subscription entry, wherein the first subscription entry is configured to allow a user account to subscribe for a start-up reminder of the live-streaming room.

The apparatus further includes a first subscription entry sending unit. The first subscription entry sending unit is configured to send a first subscribe request to a server in response to a trigger operation on the first subscription entry, wherein the first subscribe request is configured to trigger the server to remind the user account before the live-streaming starts in the live-streaming room.

In some embodiments, the apparatus further includes a receiving unit. The receiving unit is configured to:
receive and display a start-up reminder, wherein the start-up reminder is sent by the server based on the first subscribe request, and the start-up reminder is configured to remind that the live-streaming is about to start in the live-streaming room.

In some embodiments, the receiving unit is configured to perform at least one of:
receiving a message sent by the server, wherein the message carries the start-up reminder; and
receiving a client reminder message sent by the server, where the client reminder message carries the start-up reminder.

In some embodiments, the displaying unit 1202 is further configured to perform at least one of:
displaying the start-up reminder by means of a push message on a client; and
displaying the start-up reminder by means of an alarm clock reminder or a calendar reminder.

In some embodiments, the displaying unit 1202 is further configured to display at least one second subscription entry, wherein one second subscription entry corresponds to one article, and the second subscription entry is configured to allow the user account to subscribe for the article corresponding to the second subscription entry.

The apparatus further includes a second subscription entry sending unit. The second subscription entry sending unit is configured to send a second subscribe request to the server in response to a trigger operation on any second subscription entry of at least one second subscription entry, wherein the second subscribe request is configured to trigger the server to perform the subscription of the user account for an article corresponding to the second subscription entry.

In the embodiments of the present disclosure, a user can know live-streaming content of the live-streaming room in advance, by viewing the live-streaming announcement instead of viewing the live-streaming room, thereby improving the efficiency of human-computer interaction.

It should be noted that the apparatus for processing the live-streaming data in the above embodiments are only illustrated by function modules. In practice, the above functions can be realized by different function modules as required. That is, the internal structure of the device can be divided into different function modules to realize all or part of the functions illustrated above. In addition, the apparatus for processing the live-streaming data in the above embodiments has the same concept as the method for processing the live-streaming data in the above embodiments. Specific implementation processes in the apparatus embodiments can be referred to the method embodiments, which will not be repeated here.

An embodiment of the present disclosure provides a computer device. The computer device includes: one or more processors, and one or more memories configured to store one or more instructions or one or more program codes executable by the one or more processors, wherein the one or more processors, when loading and executing the one or more instructions or one or more program codes, are caused to perform the method as defined in the above embodiments of present disclosure.

In some embodiments, the computer device in the embodiments of the present disclosure is provided as a terminal. FIG. 13 is a block diagram of a terminal 1300 according to an embodiment of the present disclosure. The terminal 1300 can be: a smart phone, a tablet computer, a moving picture experts group audio layer III (MP3) player, a moving picture experts group audio layer IV (MP4) player, a laptop computer, or a desktop computer. In some embodiments, the terminal 1300 is referred to as a user device, a portable terminal, a laptop terminal, a desktop terminal or other names.

In general, the terminal 1300 includes: one or more processors 1301 and one or more memories 1302.

The processor 1301 includes one or more processing cores, such as one or more quad-core processors or eight-core processors. In some embodiments, the processor 1301 is implemented in at least one of hardware form of a digital signal processor (DSP), a field-programmable gate array (FPGA), and a programmable logic array (PLA). In some embodiments, the processor 1301 includes a main processor and a co-processor. The main processor is a processor configured to process data in an awake state, and is also called as a central processing unit (CPU). The co-processor is a low-power-consumption processor configured to process data in a standby state. In some embodiments, the processor 1301 is integrated with a graphic processing unit (GPU). The GPU is configured to render and draw content that needs to be displayed on a display screen. In some embodiments, the processor 1301 further includes an artificial intelligence (AI) processor. The AI processor is configured to process computational operations related to machine learning.

The memory 1302 includes one or more computer-readable storage medium. In some embodiments, the one or more computer-readable storage medium is non-transitory. In some embodiments, the memory 1302 further includes a high-speed random-access memory, and a non-volatile memory, such as one or more magnetic-disk storage devices and flash storage devices. In some embodiments, the non-transitory computer-readable storage medium in the memory 1302 is configured to store at least one program code. The at least one program code is configured to be executed by the processor 1301 to perform the method for processing the live-streaming data according to the method embodiments of the present disclosure.

In some embodiments, the terminal 1300 further includes: a peripheral device interface 1303 and at least one peripheral device. In some embodiments, the processor 1301, the memory 1302, and the peripheral device interface 1303 are connected by a buses or a signal line. In some embodiments, each peripheral device is connected to the peripheral device interface 1303 by a bus, a signal line or a circuit board. In some embodiments, the peripheral device includes: at least one of a radio frequency circuit 1304, a display screen 1305, a camera assembly 1306, an audio circuit 1307, a positioning assembly 1308, and a power supply 1309.

The peripheral device interface 1303 is configured to connect at least one peripheral device related to input/output (I/O) to the processor 1301 and the memory 1302. In some embodiments, the processor 1301, the memory 1302 and the peripheral device interface 1303 are integrated on the same chip or circuit board; and in some embodiments, any one or two of the processor 1301, the memory 1302 and the peripheral device interface 1303 are implemented on a separate chip or circuit board, which is not limited in the embodiments of the present disclosure.

The radio frequency circuit 1304 is configured to receive and transmit a radio frequency (RF) signal, which is also called an electromagnetic signal. The radio frequency circuit 1304 communicates by means of the electromagnetic signal with a communication network and other communication devices. The radio frequency circuit 1304 converts an electrical signal to the electromagnetic signal for transmission, or converts the received electromagnetic signal to the electrical signal. In some embodiments, the radio frequency circuit 1304 includes: an antenna system, an RF transceiver, one or more amplifiers, a tuner, an oscillator, a digital signal processor, a coding-decoding chip set, a user identity module card, and the like. In some embodiments, the radio frequency circuit 1304 communicates with other terminals via at least one wireless communication protocol. The wireless communication protocol includes: a metropolitan area network, various generations of mobile communication networks (2G, 3G, 4G, and 5G), a wireless local area network and/or a wireless fidelity (Wi-Fi)) network. In some embodiments, the radio frequency circuit 1304 further includes a circuit related to near-field communication (NFC), which is not limited in the present disclosure.

The display screen 1305 is configured to display a user interface (UI). In some embodiments, the UI includes a graphic, a text, an icon, a video, and any combination thereof. In the case that the display screen 1305 is a touch display screen, the display screen 1305 is further capable of acquiring a touch signal on or over a surface of the display screen 1305. In some embodiments, the touch signal is input to the processor 1301 as a control signal for processing. In some embodiments, the display screen 1305 is further configured to provide a virtual button and/or a virtual keyboard, which is also called a soft button and/or a soft keyboard. In some embodiments, the display screen 1305 is provided as one screen disposed on a front panel of the terminal 1300. In some other embodiments, the display screens 1305 are provided as at least two screens respectively disposed on different surfaces of the terminal 1300 or designed as folded. In some other embodiments, the display screen 1305 is flexible display screen disposed on a curved surface or a folded surface of the terminal 1300. In some embodiments, the display screen 1305 is provided as a non-rectangular pattern, i.e., an irregular-shaped screen. In some embodiments, the display screen 1305 can be a liquid crystal display (LCD) screen, an organic light-emitting diode (OLED) screen, or the like.

The camera assembly 1306 is configured to capture an image or a video. In some embodiments, the camera assembly 1306 includes a front camera and a rear camera. In general, the front camera is disposed on a front panel of the terminal, and the rear camera is disposed on the rear surface of the terminal. In some embodiments, at least two rear cameras are disposed, each of which is any one of a primary camera, a depth-of-field camera, a wide-angle camera, and a telephoto camera, to realize the fusion of the primary camera and the depth-of-field camera for a background blurring function, the fusion of the primary camera and the wide-angle camera for a panoramic shooting function and a virtual reality (VR) shooting function, or other fusion shooting functions. In some embodiments, the camera assembly 1306 further includes a flashlight. In some embodiments, the flashlight is a monochromatic-temperature flashlight, and in some embodiments, the flashlight is a dichromatic-temperature flashlight. The dichromatic-temperature flashlight refers to a combination of a warm-light flashlight and a cold-light flashlight, and may serve to compensate light at different chromatic temperatures.

In some embodiments, the audio circuit 1307 includes a microphone and a speaker. The microphone is configured to acquire sound waves of a user and an environment, convert the sound waves into electrical signals, and input the electrical signals to the processor 1301 for processing, or input the electrical signals to the radio frequency circuit 1304 to enable voice communication. In some embodiments, for the purpose of stereo acquisition or noise reduction, a plurality of microphones is provided and respectively disposed at different parts of the terminal 1300. In some embodiments, the microphone is an array microphone or an omnidirectional acquisition microphone. The speaker is configured to convert electrical signals from the processor 1301 or the radio frequency circuit 1304 into sound waves. In some embodiments, the speaker is a conventional film speaker; and in some other embodiments, the speaker is a piezoelectric ceramic speaker. In the case that the speaker is the piezoelectric ceramic speaker, the speaker is capable of converting the electrical signals into sound waves audible to human beings, and converting the electrical signals into sound waves inaudible to human beings for distance measurement and other purposes. In some embodiments, the audio circuit 1307 further includes a headphone jack.

The positioning assembly 1308 is configured to determine a current geographic location of the terminal 1300 to implement navigation or a location based service (LBS). In some embodiments, the positioning assembly 1308 is the United States' Global Positioning System (GPS), Russia's Global Navigation Satellite System (GLONASS), China's BeiDou Navigation Satellite System (BDS), and the European Union's Galileo Satellite Navigation System (Galileo).

The power supply 1309 is configured to supply power for various assemblies in the terminal 1300. In some embodiments, the power supply 1309 is alternating current, direct current, a disposable battery, or a rechargeable battery. In the case that the power supply 1309 includes a rechargeable battery, the rechargeable battery may be charged in a wired mode or a wireless mode. In some embodiments, the rechargeable battery further supports the fast-charging technology.

In some embodiments, the terminal 1300 further includes one or more sensors 1310. The one or more sensors 1310 include: an acceleration sensor 1311, a gyroscope sensor 1312, a pressure sensor 1313, a fingerprint sensor 1314, an optical sensor 1315, and a proximity sensor 1316.

The acceleration sensor 1311 can be configured to detect magnitudes of accelerations on three coordinate axes of a coordinate system established by the terminal 1300. For instance, the acceleration sensor 1311 is configured to detect components of gravitational acceleration on the three coordinate axes. In some embodiments, the processor 1301 controls the display screen 1305 to display a user interface in a lateral view or a vertical view based on a gravitational acceleration signals acquired by the acceleration sensor 1311. In some embodiments, the acceleration sensor 1311 is further configured to acquire motion data of a game or a user.

The gyroscope sensor 1312 can be configured to detect a body direction and a rotational angle of the terminal 1300. In some embodiments, the gyroscope sensor 1312 acquires 3D motions of a user on the terminal 1300 in cooperation with the acceleration sensor 1311. The processor 1301 can implement the following functions based on data acquired by the gyroscope sensor 1312: motion sensing (such as changing the UI based on a tilt operation of a user), image stabilization during shooting, game control, and inertial navigation.

In some embodiments, the pressure sensor 1313 is disposed on a side frame of the terminal 1300 and/or at a layer under the display screen 1305. In the case that the pressure sensor 1313 is disposed on the side frame of the terminal 1300, a user's holding signal to the terminal 1300 can be detected, and the processor 1301 performs left/right hand recognition or a shortcut operation based on the holding signal acquired by the pressure sensor 1313. In the case that the pressure sensor 1313 is disposed at the layer under the display screen 1305, the processor 1301 controls an operable control on the UI based on a user's press operation on the display screen 1305. The operable control includes at least one of a button control, a scroll bar control, an icon control, and a menu control.

The fingerprint sensor 1314 is configured to acquire a fingerprint of a user. An identity of the user is recognized by the processor 1301 based on the fingerprint acquired by the fingerprint sensor 1314, or the identity of the user is recognized by the fingerprint sensor 1314 based on the acquired fingerprint. In the case that the identity of the user is recognized as a trusted identity, the user is authorized by the processor 1301 to perform a related sensitive operation, such as unlocking the screen, viewing encrypted information, downloading software, paying, changing settings, and the like. In some embodiments, the fingerprint sensor 1314 is disposed on the front, rear, or side surface of the terminal 1300. In some embodiments, in the case that a physical button or its manufacturer's logo is disposed on the terminal 1300, the fingerprint sensor 1314 is integrated with the physical button or the manufacturer's logo.

The optical sensor 1315 is configured to acquire the intensity of ambient light. In some embodiments, the processor 1301 can control the display brightness of the display screen 1305 based on the intensity of ambient light acquired by the optical sensor 1315. In some embodiments, in the case that the intensity of ambient light is high, the display brightness of the display screen 1305 is increased; and in the case that the intensity of ambient light is low, the display brightness of the display screen 1305 is decreased. In some other embodiments, the processor 1301 is further configured to dynamically adjust imaging parameters of the camera assembly 1306 based on the intensity of ambient light acquired by the optical sensor 1315.

The proximity sensor 1316, also referred as a distance sensor, is generally disposed on the front panel of the terminal 1300. The proximity sensor 1316 is configured to acquire a distance between a user and the front surface of the terminal 1300. In some embodiments, in the case that the distance between the user and the front surface of the terminal 1300 detected by the proximity sensor 1316 gradually decreases, the display screen 1305 is controlled by the processor 1301 to switch from a screen-on state to a screen-off state; and in the case that the distance between the user and the front surface of the terminal 1300 detected the proximity sensor 1316 gradually increases, the display screen 1305 is controlled by the processor 1301 to switch from the screen-off state to the screen-on state.

In some embodiments, a storage medium stored with one or more instructions therein is further provided, such as a memory storing one or more instructions. The one or more instructions, when loaded and executed by a processor of the terminal, cause the terminal to perform the method for processing the live-streaming data in the above embodiments. In some embodiments, the above storage medium is a non-volatile computer-readable storage medium. For example, the non-volatile computer-readable storage medium includes a read-only memory (ROM), a random-access memory (RAM), a compact disc read-only memory (CD-ROM), a magnetic tape, a floppy disk, an optical data storage device, and the like.

In some embodiments, the one or more instructions stored in the non-volatile computer-readable storage medium, when loaded and executed by a processor of a computer device, causes the computer device to perform the method for processing the live-streaming data as defined above.

Each embodiment of the present disclosure can be executed individually or in combination with other embodiments, which are all within the scope of the present disclosure.

## Claims

1. A method for processing live-streaming data, **characterized by** comprising:
displaying (201) at least one live-streaming plan of a live-streaming room, wherein the live-streaming plan indicates a plan for posting an article in the live-streaming room;
determining (202; 403) a target live-streaming plan in response to a select operation on the at least one live-streaming plan;
acquiring (203) plan content of the target live-streaming plan in response to an announcement set operation on the target live-streaming plan, wherein the plan content comprises an article plan, and the article plan involves at least one article; and
generating (204) a live-streaming announcement of the target live-streaming plan based on the plan content.

2. The method according to claim 1, wherein the plan content further comprises basic plan information of the target live-streaming plan, and said generating (204) the live-streaming announcement of the target live-streaming plan based on the plan content comprises:
generating (405) basic live-streaming information of the live-streaming announcement of the target live-streaming plan based on the basic plan information;
generating (406) article announcement information of the live-streaming announcement based on the article plan; and
generating (407) the live-streaming announcement based on the basic live-streaming information and the article announcement information.

3. The method according to claim 2, wherein said generating (406) the article announcement information of the live-streaming announcement based on the article plan comprises:
acquiring transaction data of a first article in response to a transaction form set operation on the first article, wherein the transaction data indicates a transaction form for transacting the first article, and the first article is any article of the at least one article in the article plan; and
adding the transaction data of the first article to the article announcement information.

4. The method according to claim 2, wherein said generating (406) the article announcement information of the live-streaming announcement based on the article plan comprises:
determining an announcement sequence of the at least one article in the article announcement information in response to a sequence adjust operation on the at least one article in the article plan, wherein the announcement sequence indicates a display sequence of the at least one article in the live-streaming announcement.

5. The method according to claim 2, wherein said generating (406) the article announcement information of the live-streaming announcement based on the article plan comprises:
adding a recommendation tag to a second article in response to a recommend operation on the second article, wherein the second article is any article of the at least one article in the article plan; and
adding the second article and the recommended tag of the second article to the article announcement information.

6. The method according to any one of claims 1-5, further comprising at least one of:
acquiring an announcement cover of the target live-streaming plan in response to a cover set operation on the target live-streaming plan; and
acquiring a preview video of the target live-streaming plan in response to a video set operation on the target live-streaming plan.

7. The method according to any one of claims 1-6, wherein said displaying (201) the at least one live-streaming plan of the live-streaming room comprises:
displaying (401) a live-streaming announcement list page, wherein the live-streaming announcement list page comprises an announcement create control; and
displaying (402) the at least one live-streaming plan, in response to an operation on the announcement create control.

8. The method according to claim 7, wherein said displaying the live-streaming announcement list page comprises at least one of:
displaying at least one created live-streaming announcement and at least one release state on the live-streaming announcement list page, wherein one release state corresponds to one created live-streaming announcement, and the release state comprises a pending release state, a released state, or a revoked state; and
displaying at least one created live-streaming announcement and at least one live-streaming state on the live-streaming announcement list page, wherein one live-streaming state corresponds to one created live-streaming announcement, and the live-streaming state comprises an un-started state, an in-progress state, an end state, or an expiration state.

9. The method according to any one of claims 1-8, further comprising:
sending (408) a live-streaming announcement release request to a server, wherein the live-streaming announcement release request is configured to request the server to release the live-streaming announcement to at least one user account.

10. The method according to claim 9, further comprising:
displaying presentation data information on a details page of the live-streaming announcement after the live-streaming announcement is released, wherein the presentation data information comprises at least one of a total number of presentation times of the live-streaming announcement and a number of presentation times of the live-streaming announcement at each presentation position.

11. The method according to claim 9, wherein the live-streaming announcement released to the at least one user account is associated with a first subscription entry, wherein the first subscription entry is configured to allow the at least one user account to subscribe for a start-up reminder of the live-streaming room; and
the method further comprises:
displaying first subscription data information on a details page of the live-streaming announcement, wherein the first subscription data information comprises at least one of a total number of user accounts that have subscribed for the start-up reminder, and a number of user accounts that have subscribed for the start-up reminder based on each presentation position.

12. The method according to claim 11, further comprising at least one of:
displaying a first proportion on the details page of the live-streaming announcement, wherein the first proportion is a proportion of user accounts that have followed an account of an anchor of the live-streaming room, among the user accounts that have subscribed for the start-up reminder; and
displaying a second proportion on the details page of the live-streaming announcement, wherein the second proportion is a proportion of user accounts that have undergone an article transaction event based on articles associated with the account of the anchor of the live-streaming room, among the user accounts that have subscribed for the start-up reminder.

13. The method according to claim 11 or 12, further comprising at least one of:
displaying a first account subscription rate for the live-streaming room on the details page of the live-streaming announcement, wherein the first account subscription rate indicates a proportion of user accounts that have undergone an article transaction event, among the user accounts that have subscribed for the start-up reminder; and
displaying a second account subscription rate for the live-streaming announcement at each presentation position, on the details page of the live-streaming announcement, wherein the second account subscription rate indicates a proportion of the user accounts that have undergone the article transaction event, among the user accounts that have subscribed for the start-up reminder at the presentation position.

14. The method according to any one of claims 11-13, wherein the live-streaming announcement released to the at least one user account is associated with at least one second subscription entry, wherein one second subscription entry corresponds to one article in the live-streaming announcement, and the second subscription entry is configured to allow the at least one user account to subscribe for the at least one article; and
the method further comprises:
displaying second subscription data information on a details page of the live-streaming announcement, wherein the second subscription data information comprises a number of subscriber user accounts corresponding to the at least one article.

15. An apparatus for processing live-streaming data, **characterized by** comprising:
a displaying unit (1101), configured to display at least one live-streaming plan of a live-streaming room, wherein the live-streaming plan indicates a plan for posting an article in the live-streaming room;
a determining unit (1102), configured to determine a target live-streaming plan in response to a select operation on the at least one live-streaming plan;
an acquiring unit (1103), configured to acquire plan content of the target live-streaming plan in response to an announcement set operation on the target live-streaming plan, wherein the plan content comprises an article plan, and the article plan involves at least one article; and
a generating unit (1104), configured to generate a live-streaming announcement of the target live-streaming plan based on the plan content.
